(19) Europäisches Patentamt / European Patent Office / Office européen des brevets

(11) **EP 2 002 428 B1**

(12) **FASCICULE DE BREVET EUROPEEN**

(45) Date de publication et mention de la délivrance du brevet:
**10.08.2011 Bulletin 2011/32**

(21) Numéro de dépôt: **07731611.5**

(22) Date de dépôt: **13.02.2007**

(51) Int Cl.:
***G10L 19/14*** *(2006.01)*

(86) Numéro de dépôt international:
**PCT/FR2007/050786**

(87) Numéro de publication internationale:
**WO 2007/096552 (30.08.2007 Gazette 2007/35)**

(54) **PROCEDE DE DISCRIMINATION ET D'ATTENUATION FIABILISEES DES ECHOS D'UN SIGNAL NUMERIQUE DANS UN DECODEUR ET DISPOSITIF CORRESPONDANT**

VERFAHREN ZUR TRAINIERTEN DISKRIMINATION UND DÄMPFUNG VON ECHOS EINES DIGITALSIGNALS IN EINEM DECODER UND ENTSPRECHENDE EINRICHTUNG

METHOD FOR TRAINED DISCRIMINATION AND ATTENUATION OF ECHOES OF A DIGITAL SIGNAL IN A DECODER AND CORRESPONDING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.02.2006 FR 0601466**

(43) Date de publication de la demande:
**17.12.2008 Bulletin 2008/51**

(73) Titulaire: **FRANCE TELECOM**
**75015 Paris (FR)**

(72) Inventeurs:
• **KOVESI, Balazs**
  **22300 Lannion (FR)**
• **LE GUYADER, Alain**
  **22300 Lannion (FR)**

(74) Mandataire: **Cabinet Plasseraud**
**52, rue de la Victoire**
**75440 Paris Cedex 09 (FR)**

(56) Documents cités:
**EP-A- 1 335 353     WO-A-2006/114368**

**Description**

L'invention concerne un procédé et un dispositif de discrimination et d'atténuation fiabilisées des échos d'un signal numérique dans un décodeur et un dispositif correspondant.

Pour le transport des signaux audionumériques sur les réseaux de transmission, qu'il s'agisse de réseaux fixes, mobiles ou de diffusion ou pour le stockage des signaux, on fait appel à des processus de compression mettant en oeuvre des systèmes de codage du type codage temporel éventuellement prédictif ou codage par transformation, dit codage par transformée.

Le procédé et le dispositif, objets de l'invention, ont comme domaine d'application la compression des signaux sonores, en particulier les signaux audionumériques codés dont les trames sont le siège de transitions d'attaques sonores et/ou de déclins engendrées par des instruments de musique, des signaux vocaux comportant des syllabes plosives, et, en particulier, aux dispositifs décodeurs multicouches incluant des décodeurs dans le domaine temporel (prédictifs ou autres) et des décodeurs par transformée fréquentielle inverse.

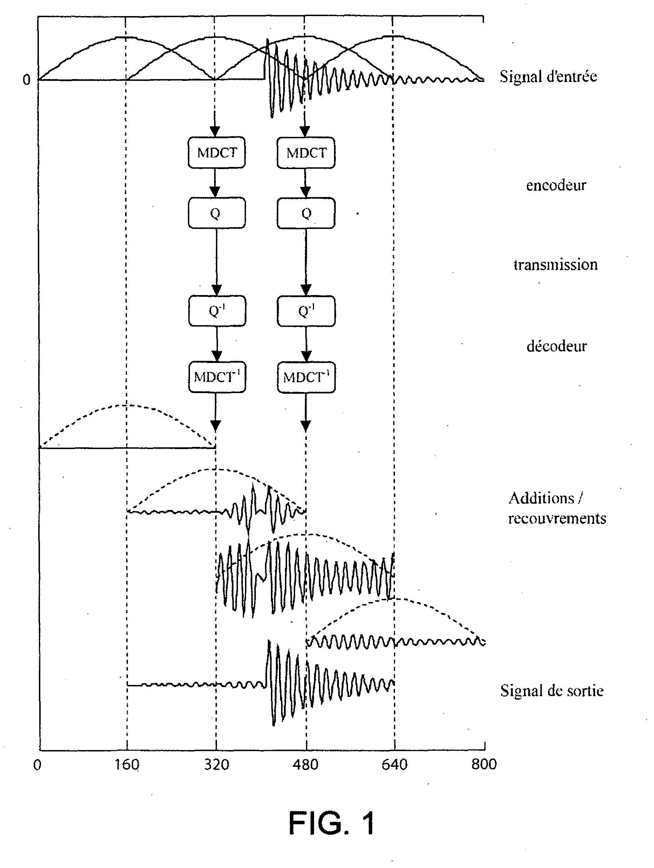

La figure 1 représente à titre illustratif, un schéma de principe du codage et du décodage, d'un signal audio numérique par transformée et addition/recouvrement selon l'art antérieur.

Pour une description plus détaillée des processus de codage et du décodage précité, on pourra par exemple se reporter à l'introduction à la description de la demande de brevet français 05 07471 déposée le 12 juillet 2005 par la demanderesse.

Certains sons musicaux, tels que les percussions et certaines séquences de parole comme les syllabes plosives, sont caractérisés par des attaques extrêmement brusques qui se traduisent par des transitions très rapides et une variation très forte de la dynamique du signal échantillonné en l'espace de quelques échantillons (à partir de l'échantillon 410 de la figure 1).

La découpe en blocs successifs d'échantillons opérée par le codage par transformée est totalement indépendante du signal sonore et les transitions apparaissent donc en un point quelconque de la fenêtre d'analyse. Or en codage par transformée, le bruit est réparti temporellement de façon uniforme sur toute la durée du bloc d'échantillons de longueur 2L. Ceci se traduit par l'apparition de pré-échos antérieurement à la transition et de post-échos postérieurement à la transition.

Le niveau de bruit est inférieur à celui du signal pour les échantillons de forte énergie, suivant immédiatement la transition, mais il est supérieur à celui du signal pour les échantillons d'énergie plus faible, notamment sur la partie précédant la transition (échantillons 160 - 410 de la figure 1). Pour la partie précitée, le rapport signal à bruit est largement négatif et la dégradation résultante, désignée pré-échos, peut apparaître très gênante.

On peut observer sur la figure 1 que le pré-écho affecte la trame précédant la transition ainsi que la trame où se produit la transition.

En effet, l'oreille humaine effectue un pré-masquage assez limité, de l'ordre de quelques millisecondes, avant la transmission physiologique de l'attaque.

Le bruit produit, ou pré-écho, est audible lorsque la durée du pré-écho est supérieure à la durée du pré-masquage.

L'oreille humaine effectue également un post-masquage d'une durée plus longue, de 5 à 60 millisecondes, lors du passage de séquences de forte énergie à des séquences de faible énergie. Le taux ou niveau de gêne acceptable pour les post-échos est donc plus important que pour les pré-échos.

Le phénomène des pré-échos, plus critique, est d'autant plus gênant que la longueur des blocs en nombre d'échantillons est importante. Or, en codage par transformée, il est nécessaire d'avoir une résolution fidèle des zones fréquentielles les plus significatives. A fréquence d'échantillonnage fixée et à débit fixé, si on augmente le nombre de points de la fenêtre on disposera de plus de bits pour coder les raies fréquentielles jugées utiles par le modèle psycho acoustique, d'où l'avantage d'utiliser des blocs de grande longueur. Lorsqu'un processus de codage, l'AAC (Advanced Audio Coding) par exemple, est mis en oeuvre, une fenêtre de grande longueur contient un nombre fixe d'échantillons, 2048, soit sur une durée de 64 ms à une fréquence d'échantillonnage de 32 kHz. Les codeurs utilisés pour les applications conversationnelles utilisent souvent une fenêtre de durée 40 ms à 16 kHz et une durée de renouvellement de trame de 20 ms.

Dans le but de réduire l'effet gênant précité du phénomène des pré-échos, et dans une moindre mesure des post-échos, différentes solutions ont jusqu'ici été proposées.

Une première solution consiste à appliquer un filtrage. Dans la zone précédant la transmission due à l'attaque, le signal reconstitué est en fait constitué du signal original et du bruit de quantification superposé au signal.

Une technique de filtrage correspondante a été décrite dans l'article intitulé High Quality Audio Transform Coding at 64 kbits, IEEE Trans on Communications Vol 42 No. 11, November 1994, publié par Y. Mahieux et J. P. Petit.

La mise en oeuvre d'un tel filtrage nécessite la connaissance de paramètres dont certains sont estimés au décodeur à partir des échantillons bruités. Par contre, des informations telles que l'énergie du signal d'origine ne peuvent être connues qu'au codeur et doivent par conséquent être transmises. Lorsque le bloc reçu contient une variation brusque de dynamique, le traitement de filtrage lui est appliqué.

Le processus de filtrage précité ne permet pas de retrouver le signal d'origine, mais procure une forte réduction des pré-échos. Il nécessite toutefois de transmettre les paramètres auxiliaires supplémentaires au décodeur.

Une deuxième solution consiste à réduire les pré-échos par une commutation dynamique des fenêtres.

Une telle technique a été décrite par le brevet US 5214742 délivré à B. Edler. Cette solution a fait l'objet d'applications dans différentes solutions de codage audio selon des normes internationales.

Selon cette solution, en raison du fait que la résolution temporelle et fréquentielle des signaux dépendent fortement de la longueur de la fenêtre de codage, les codeurs fréquentiels commutent entre des fenêtres longues (de 2048 échantillons par exemple), pour les signaux stationnaires, et des fenêtres courtes (256 échantillons par exemple) pour des signaux à grande variation de dynamique ou transitoires. Cette adaptation est exécutée dans le module AAC, la décision étant prise trame par trame au codeur.

Un des inconvénients de cette deuxième solution est qu'elle induit un retard supplémentaire de l'ordre de N/2 échantillons en raison du fait que si une transition commence dans la fenêtre suivante il faut être en mesure de préparer la transition et de commuter sur une fenêtre de transition permettant de conserver la reconstruction parfaite.

La réduction des échos peut toutefois être facilitée dans les codeurs hiérarchiques lorsque le décodeur est constitué de plusieurs étages de décodage temporel éventuellement prédictif et de décodage par transformée. Dans ce cas, les étages de décodage temporel peuvent être utilisés pour la détection de l'écho. Un exemple de décodage de ce type est décrit par la demande de brevet US 2003/0154074 de K. Kikuiri et al.

Le mode opératoire connu de l'état de l'art décrit par la demande de brevet précitée consiste à effectuer une détection des pré-échos exclusivement à partir du signal du coeur de base CELP décodé, pour Code Excited Linear Prediction en anglais.

Un tel mode opératoire ne permet pas d'assurer, pour cette raison, un traitement de réduction des pré-échos à partir des informations conjointes et en synchronisme des trames reconstruites du décodeur temporel et du décodeur par transformée.

La demande de brevet français 05 07471 précitée permet de discriminer la présence des échos et d'atténuer les échos d'un signal audionumérique engendré par codage hiérarchique multicouches à partir d'un codage par transformée, générateur d'échos, et d'un codage temporel, non générateur d'échos. Dans cette demande de brevet, au décodage et pour chaque trame courante du signal audionumérique, on compare, en temps réel, la valeur du rapport de l'amplitude du signal issu d'un décodage générateur d'échos à l'amplitude du signal issu d'un décodage non générateur d'échos à une valeur de seuil. Si la valeur de ce rapport est supérieure ou égale à cette valeur de seuil, on conclut à l'existence d'un écho issu du codage par transformée dans la trame courante. Sinon, la valeur de ce rapport étant inférieure à cette valeur de seuil, on conclut à la non existence d'un écho issu du codage par transformée dans cette trame courante.

Cette façon de procéder est décrite par la figure 2a et la figure 2b correspondant aux figures 3a et 3b de la demande de brevet précitée. Dans la suite de l'introduction à la description de la présente demande de brevet, les numéros de figures entre parenthèse désignent les numéros de figure de la demande de brevet français 05 07471 introduite dans la présente demande à titre de référence.

La figure 2a décrit un décodeur hiérarchique comportant une pluralité de décodeurs non générateurs d'écho, dénommés "Décodage prédictif couche i", et une pluralité de décodeurs par transformée dénommés "Décodage transformé couche j".

La figure 2b (figure 3b) décrit le dispositif 1 de discrimination des échos avec comme entrée le signal décodé issu du décodeur temporel et celui issu du décodeur par transformée. La sortie du dispositif des échos commande le dispositif 2 d'atténuation des échos par atténuation du signal décodé en sortie de l'addition/recouvrement.

La figure 2c (figure 3c) indique comment calculer les enveloppes temporelles des signaux issus respectivement du décodeur temporel et du décodeur par transformée ainsi que le drapeau de présence de l'écho.

La figure 2d (figure 3e) montre comment est effectuée l'atténuation des échos sur la durée de présence de l'écho par multiplication du signal en sortie de l'addition/recouvrement par un gain g(k) égal au rapport de l'enveloppe du signal temporel à celui du signal décodé par transformée.

$$g(k) = Min\left(Env_{P_i}(k) / Env_{T_j}(k), 1\right)$$

Sur cette figure, lorsque la valeur de POS est nulle le traitement de pré-écho est effectué sur toute la trame.

La figure 2e (figure 11) décrit le principe de la discrimination des échos dans un système multicouches où la discrimination des échos et leur atténuation est effectuée non limitativement dans deux sous-bandes de fréquences.

Dans cet exemple, les filtrages des signaux sont effectués soit par filtrage temporel sur le signal temporel $x_{P_i}$

(*n*), soit par filtrage dans le domaine fréquentiel MDCT pour Modified Discrete Cosine Transform en anglais, effectué par transformation du signal temporel en coefficients MDCT, puis manipulation des coefficients MDCT (mise à zéro de coefficients MDCT, addition, remplacement,...) et enfin transformée MDCT inverse suivie de l'addition recouvrement pour chacune des sous-bandes.

Le procédé et le dispositif décrits par la demande de brevet français précitée 05 07471 apporte une solution aux inconvénients de l'art antérieur qui ont été mentionnés précédemment.

Dans la solution décrite dans la demande de brevet français 05 07471, pour remédier au déclenchement erroné du dispositif d'atténuation des échos, il est fait appel à une procédure de prévision du déclenchement du dispositif d'atténuation des échos au codeur.

Plus précisément, comme on dispose au codeur du signal à coder par transformée, on effectue la discrimination des échos sur le signal non quantifié au codeur, et, le codeur n'étant pas sujet aux pré-échos, on est assuré que les déclenchements, s'il y en a, sont erronés. L'écho est détecté au codeur, et s'il y a une détection anormale, alors on transmet dans la trame un drapeau afin d'inhiber l'atténuation de l'écho au décodeur.

La présente invention a pour objet d'éviter les cas de déclenchement erroné du dispositif d'atténuation des échos, en l'absence, d'une part, de transmission d'une information auxiliaire spécifique venant du codeur, et, d'autre part, d'introduction de complexité supplémentaire à l'encodage

Un autre objet de la présente invention est en outre, en cas de non transmission de l'information de fausse alarme du codeur, de permettre l'inhibition de l'atténuation des échos en synchronisme avec l'apparition de l'attaque, ce qui ne peut être effectué dans les dispositifs de l'art antérieur, car le codeur temporel ne réagit généralement pas instantanément à l'attaque.

Un autre objet de la présente invention, est, en outre, d'éviter le déclenchement erroné du dispositif d'atténuation des échos lorsque le signal issu du décodeur par transformée a une dynamique constante, le dispositif d'atténuation des échos ne devant pas être activé, car il n'y a pas d'attaque, contrairement aux dispositifs de l'art antérieur, dans lesquels, lorsque le signal décodé par le décodeur temporel est faible par rapport au signal décodé par le décodeur par transformée, le dispositif d'atténuation des échos se déclenche.

Un autre objet de la présente invention est une mise en oeuvre dans le cas où un faible débit est alloué au codeur temporel, lequel, en conséquence, ne peut pas coder correctement tous les signaux en entrée.

A titre d'exemple, on peut citer le cas de certains codeurs temporels de l'art antérieur fonctionnant sur une bande de fréquences réduite du signal, 4 000 à 7 000 Hz, et qui ne peuvent coder correctement les sinusoïde présentes dans cette bande. Le signal en sortie du codeur temporel est alors faible et l'atténuation d'écho est activée à tort, ce qui produit une forte dégradation de codage.

Un autre objet de la présente invention est en outre la mise en oeuvre d'un procédé et d'un dispositif de discrimination et d'atténuation fiabilisées des échos d'un signal numérique dans un décodeur multi-couches permettant d'empêcher l'inhibition à tort de l'atténuation de post-échos lorsque l'attaque se trouve dans la trame précédente.

Le procédé de discrimination et d'atténuation des échos d'un signal audionumérique engendré à partir d'un codage par transformée, générateur d'échos, objet de l'invention telle que definie dans les revendications 1, et 10 et 13, est remarquable en ce qu'il inclut au moins au décodage, pour chaque trame courante de ce signal audionumérique, les étapes consistant à discriminer une zone à basse énergie précédant une transition vers une zone de forte énergie, définir une zone de fausse alarme correspondant aux zones non discriminées de la trame courante, déterminer un traitement initial des échos avec des valeurs de gain d'atténuation, atténuer les échos selon le traitement initial des échos dans les zones discriminées à basse énergie de la trame courante, inhiber l'atténuation des échos du traitement initial dans la zone de fausse alarme.

Le procédé objet de l'invention permet ainsi de supprimer les échos, pré-échos et post-échos, sans introduire de dégradation au signal à forte énergie engendré par une attaque.

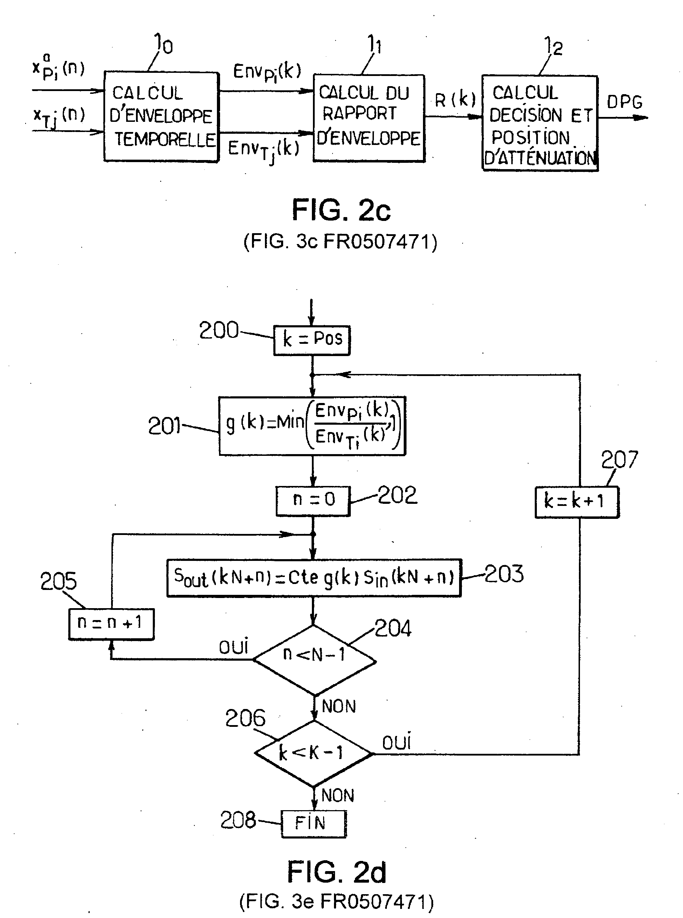

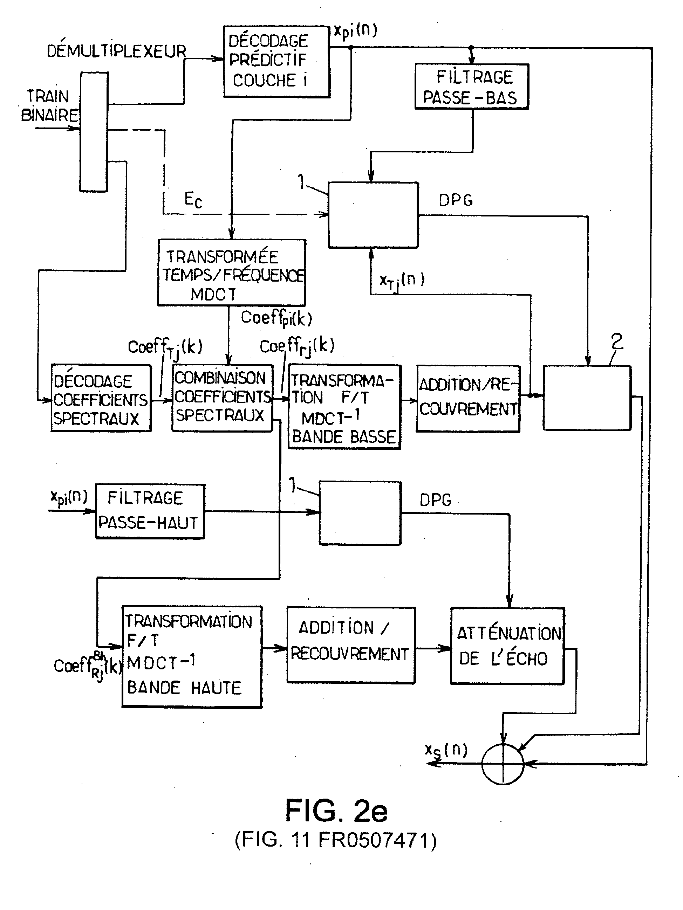

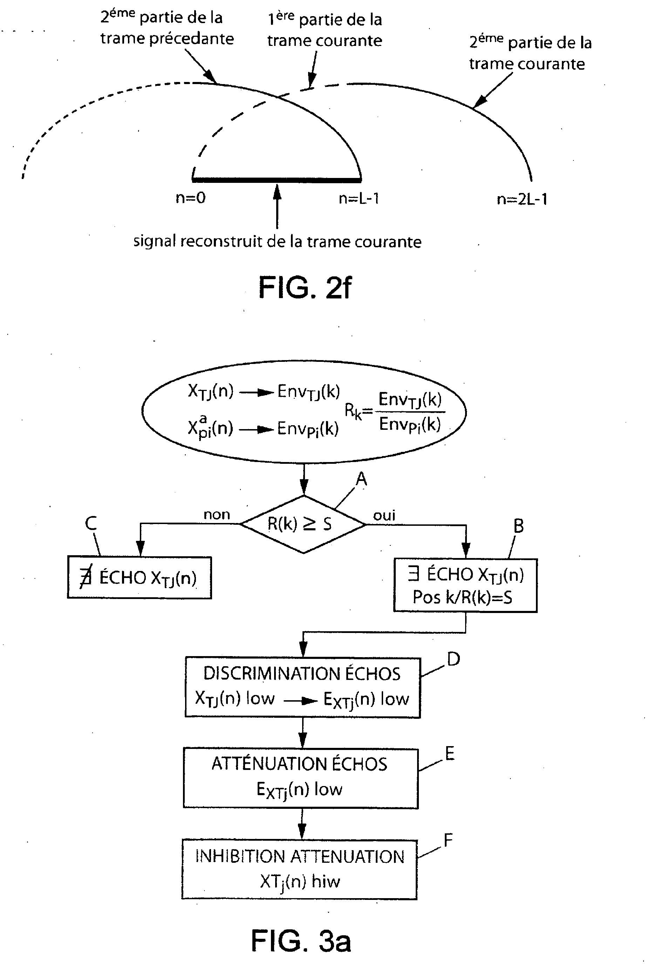

Dans la suite la notation suivante est utilisée en référence à la figure 2f et à l'équation suivante :

$$x_{rec}(n) = h(n+L)x_{prev}(n+L) + h(n)x_{cur}(n) \; pour \; n \in [0, L-1]$$

Dans un codeur par transformée, le signal reconstruit de la trame courante ($x_{rec}(n)$, $n = 0$ à $L-1$) est obtenu par addition pondérée de la deuxième partie de la sortie de la MDCT inverse des coefficients MDCT de la trame précédente ($x_{prev}(n)$, $n = L$ à $2L-1$) et de la première partie de la sortie de la MDCT inverse des coefficients MDCT de la trame courante ($x_{cur}(n)$, $n = 0$ à $L-1$). La deuxième partie de la sortie de la MDCT inverse des coefficients MDCT de la trame courante ($x_{cur}(n)$, $n = L$ à $2L-1$) sera gardée en mémoire pour être exploitée pour obtenir le signal reconstruit de la trame suivante. Pour simplifier, dans la suite, les termes "première partie de la trame courante", "deuxième partie de la trame courante", "signal reconstruit de la trame courante" seront utilisés. Dans la trame suivante, la deuxième partie de la trame courante devient donc la deuxième partie de la trame précédente.

En particulier, pour une attaque située dans la trame courante, en première ou deuxième partie, le procédé objet de l'invention consiste à générer un signal concaténé, à partir du signal reconstruit de la trame courante et du signal de la deuxième partie de la trame courante, découper ce signal concaténé en un nombre pair de sous-blocs d'échantillons de longueur déterminée, calculer l'énergie du signal de chacun des sous-blocs de longueur déterminée, calculer un premier indice représentatif du rang de l'échantillon d'énergie maximum et un deuxième indice représentatif du dernier échantillon de forte énergie, calculer l'énergie minimum sur un nombre moitié du nombre pair de sous-blocs des premiers sous-blocs du signal audionumérique, et, lorsque le rapport de l'énergie maximum à l'énergie minimum est supérieur à une valeur de seuil déterminée, un risque de pré-échos étant révélé dans la seule partie à basse énergie du signal, inhiber toute action d'atténuation sur les échantillons de forte énergie de rang compris entre le premier et le deuxième indice.

La détermination du premier et du deuxième indice permet de définir entre ces derniers une plage de fausse alarme correspondant au signal de forte énergie et dans laquelle l'atténuation des échos, inutile ou dommageable pour le signal, doit être supprimée.

Le dispositif de discrimination et d'atténuation des échos d'un signal audionumérique engendré par un codeur hiérarchique multicouches, dans un décodeur, objet de l'invention, ce décodeur comportant au moins un décodeur temporel, non générateur d'écho, et au moins un décodeur par transformée, susceptible de révéler des échos, est remarquable en ce qu'il comporte au moins au niveau d'un décodeur temporel et d'un décodeur par transformée, des moyens de discrimination d'une zone à basse énergie précédant une transition vers une zone de forte énergie, des moyens de définition d'une zone de fausse alarme correspondant aux zones non discriminées de la trame courante, des moyens de détermination d'un traitement initial des échos avec des valeurs de gain d'atténuation, des moyens d'atténuation des échos selon le traitement initial des échos appliqués aux zones discriminées à basse énergie de la trame courante et des moyens d'inhibition de l'atténuation des échos du traitement initial appliqué à la zone de fausse alarme.

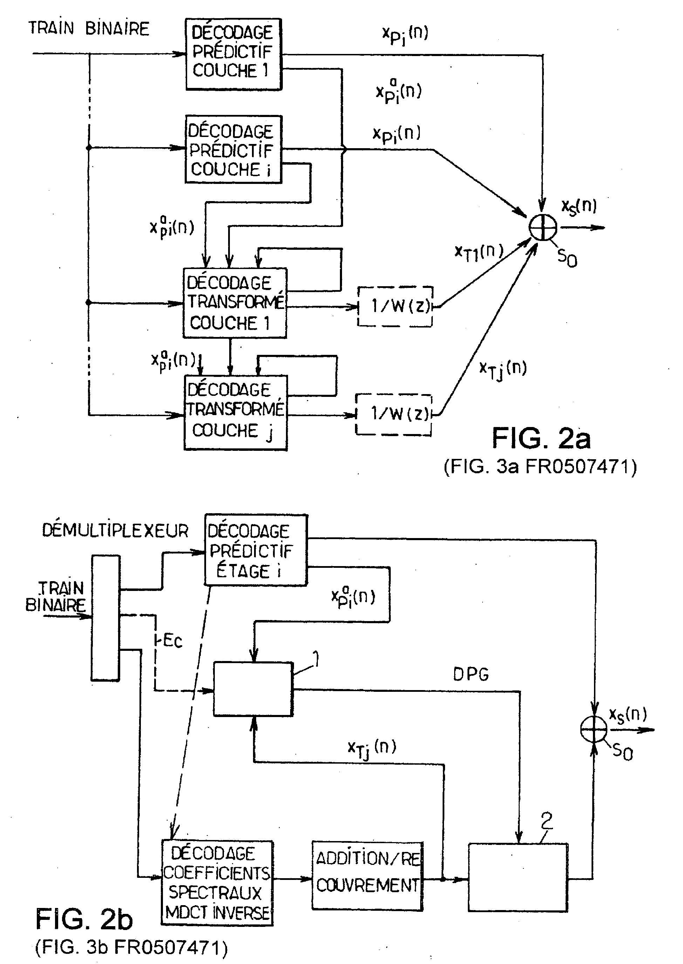

Ils seront mieux compris à la lecture de la description et à l'observation des dessins ci-après dans lesquels, outre la figure 1 et les figures 2a à 2e relatives à la technique antérieure, telle que décrite dans la demande de brevet français 05 07471, et à la figure 2f relative à l'art antérieur :

- la figure 3a représente, à titre illustratif, un organigramme général des étapes de mise en oeuvre du procédé objet de l'invention ;

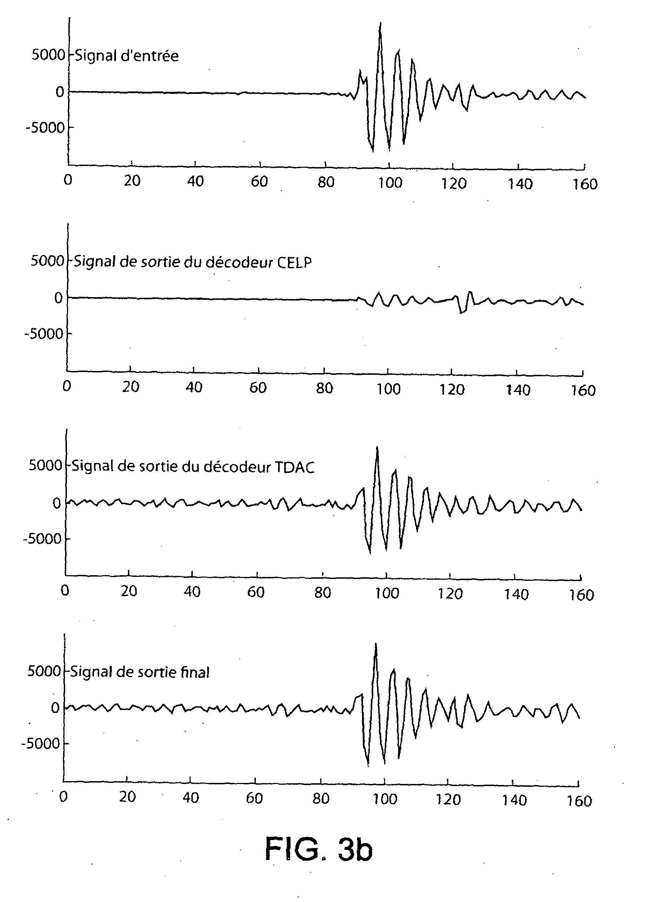

- la figure 3b représente un chronogramme des signaux audio numériques dans un codeur prédictif CELP / transformé multicouches de la bande basse du signal, en l'absence de l'atténuation des échos ;

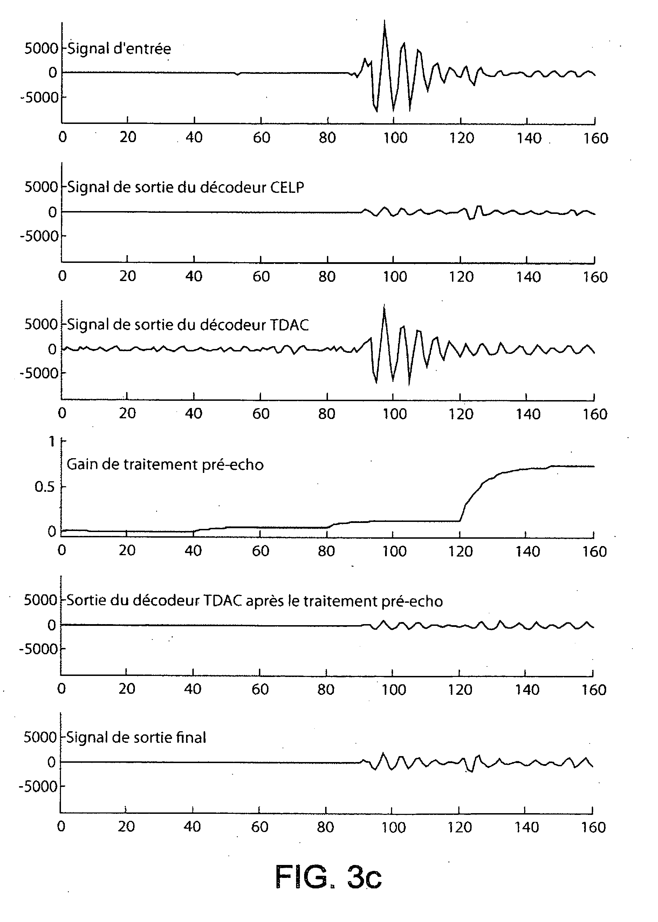

- la figure 3c représente un chronogramme des signaux audio numériques dans un codeur prédictif CELP / transformé multicouches dans la bande basse du signal, avec atténuation des échos de la technique antérieure illustrée par la figure 2b ;

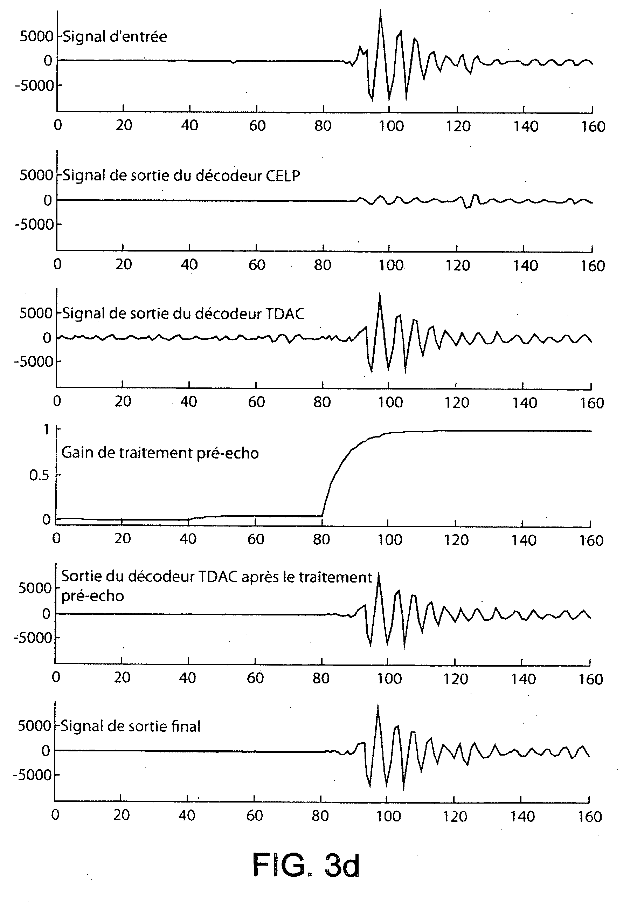

- la figure 3d représente un chronogramme des signaux audio dans un codeur CELP / transformé multicouches avec activation de l'atténuation des échos avec inhibition de l'atténuation des activations erronées dans la bande des fréquences basses du signal ;

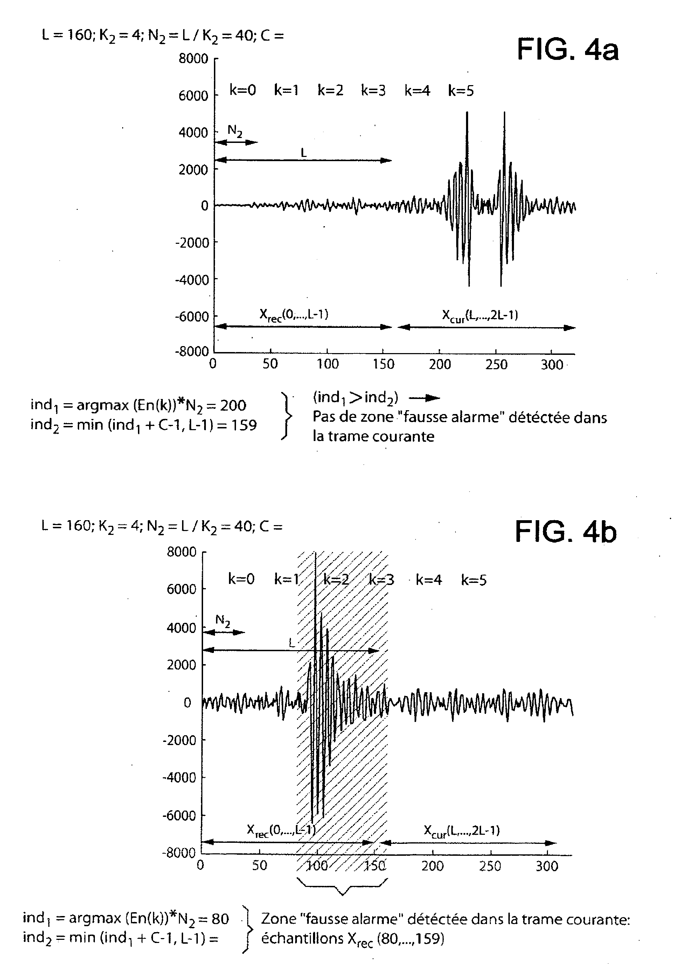

- la figure 4a représente, à titre illustratif, le dit signal concaténé, signal de commande de l'inhibition de l'atténuation de l'écho selon un premier exemple de mise en oeuvre préférentiel non limitatif de l'invention ;
- la figure 4b représente, à titre illustratif, le dit signal concaténé, signal de commande de l'inhibition de l'atténuation de l'écho selon un deuxième exemple de mise en oeuvre préférentiel non limitatif de l'invention ;

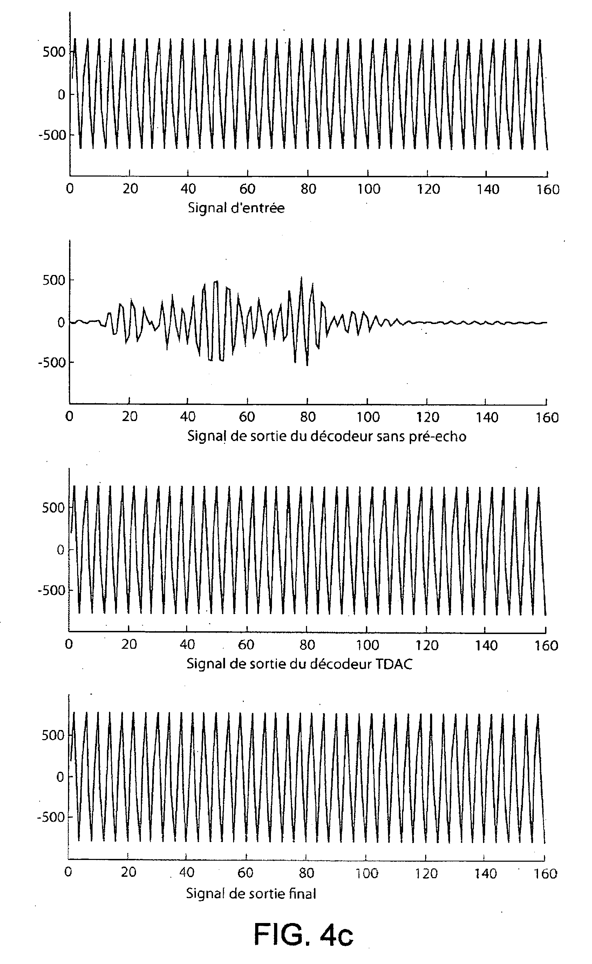

- la figure 4c représente un chronogramme des signaux audionumériques dans un décodeur temporel / transformé multicouches de la bande des fréquences hautes du signal en l'absence d'atténuation des échos, pour les cas du décodage d'une sinusoïde ;

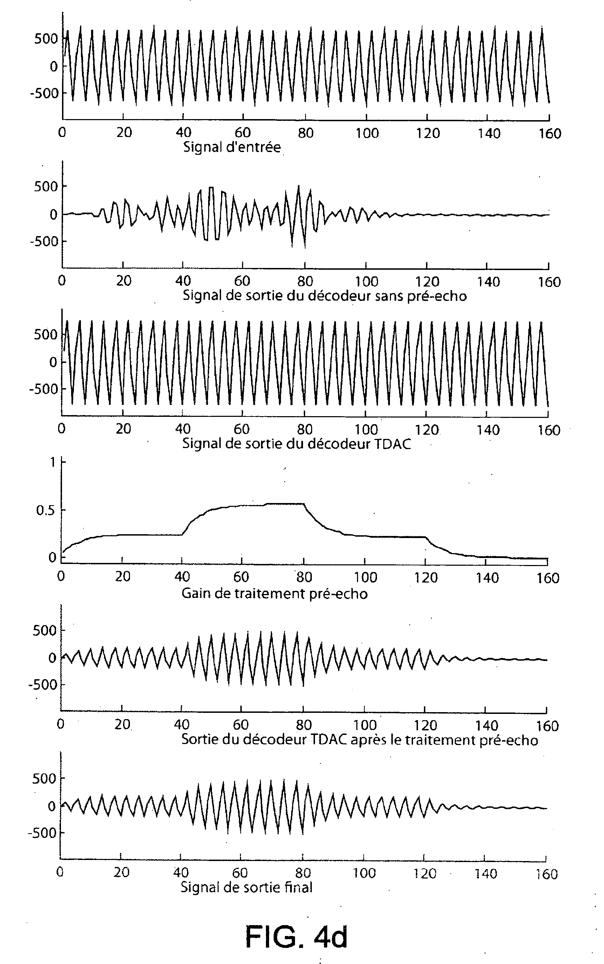

- la figure 4d représente un chronogramme des signaux audio dans un décodeur temporel / transformé multicouches dans la bande des fréquences hautes du signal avec activation de l'atténuation des échos pour le décodage d'une sinusoïde, conformément à la technique antérieure ;

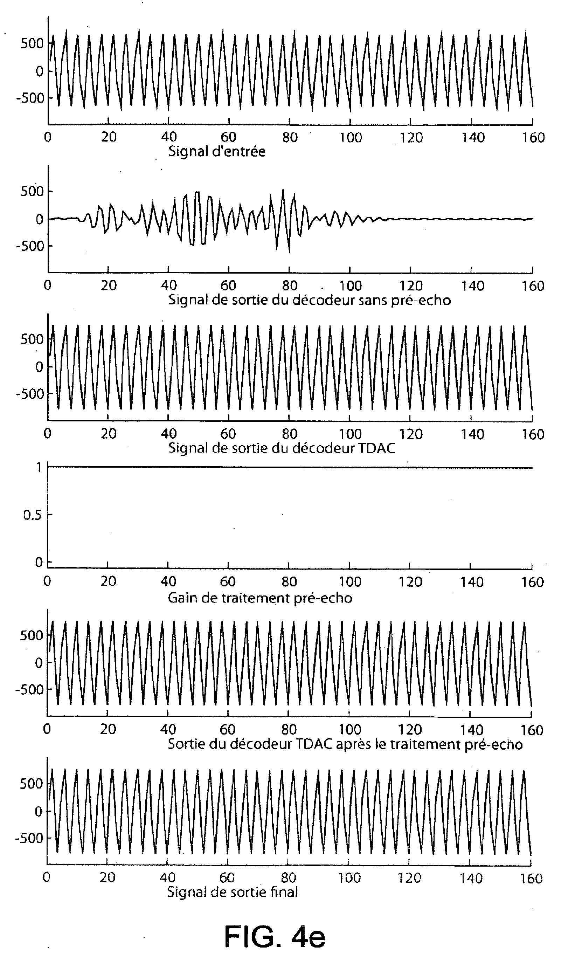

- la figure 4e représente un chronogramme des signaux audio dans un décodeur temporel / transformé multicouches de la bande des fréquences hautes du signal avec activation de l'atténuation et de l'inhibition de l'atténuation des échos pour le décodage d'une sinusoïde, conformément au procédé objet de la présente invention ;

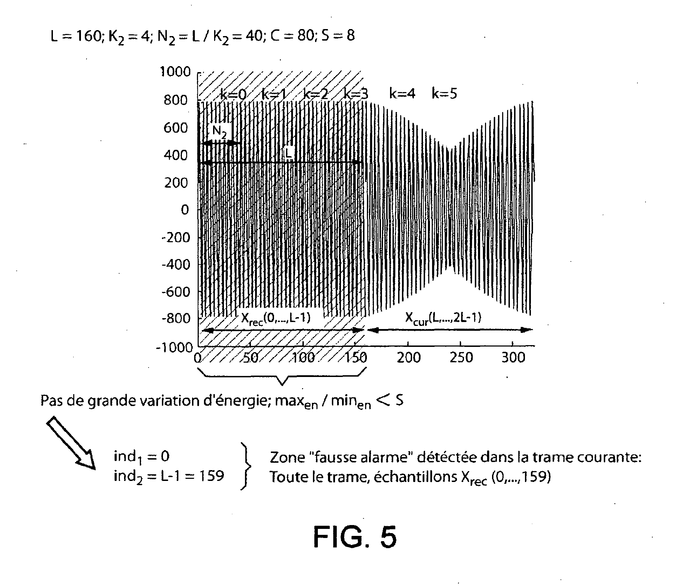

- la figure 5 représente à titre illustratif, le dit signal concaténé, signal de commande de l'inhibition de l'atténuation de l'écho selon un premier exemple de mise en oeuvre préférentiel non limitatif de l'invention ;

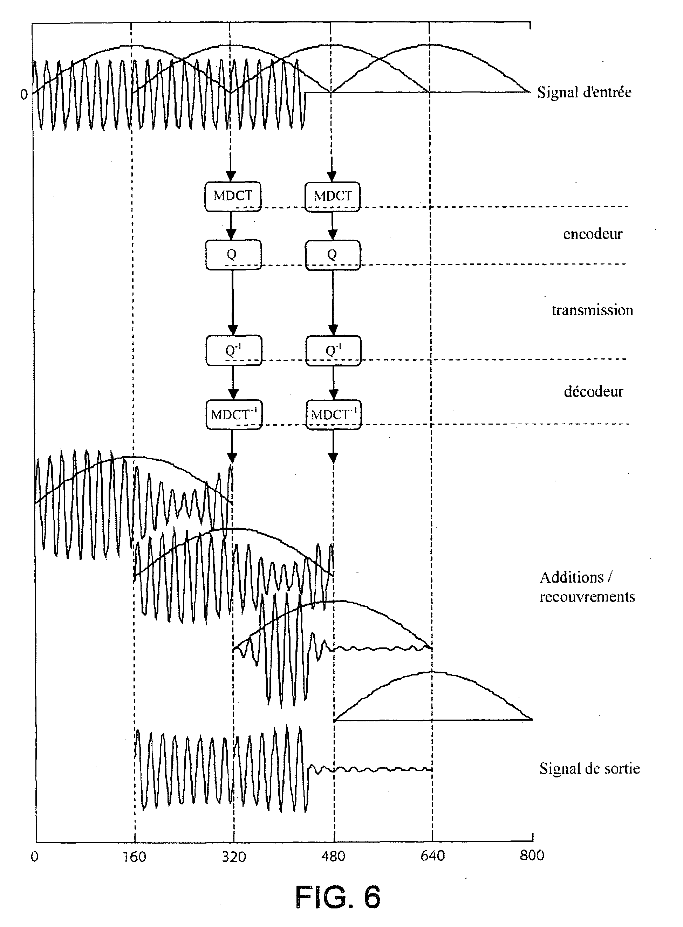

- la figure 6 représente la production de post-échos dans un processus de codage par transformée et d'addition / recouvrement de trames ;

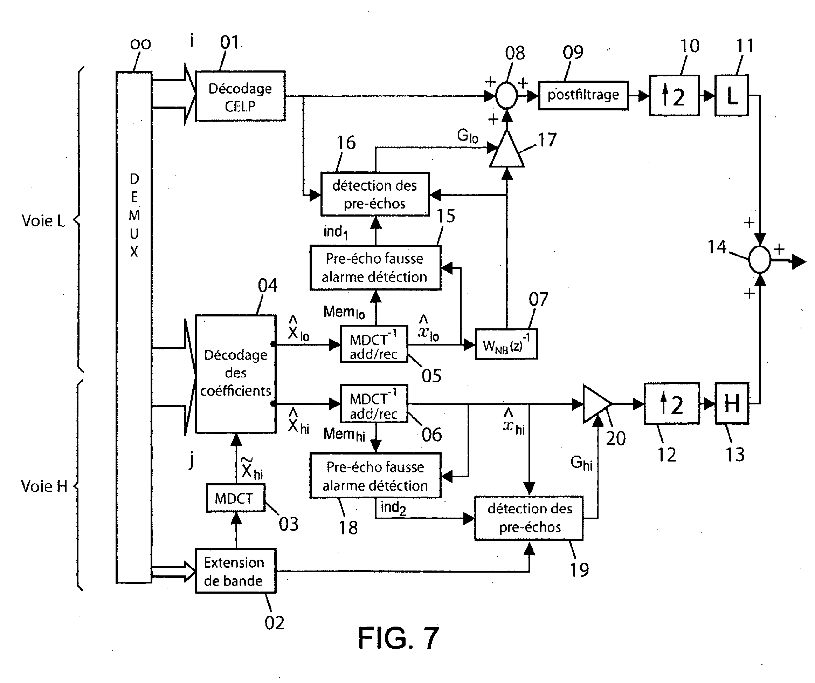

- la figure 7 représente, à titre illustratif, un schéma fonctionnel d'un dispositif de discrimination et d'atténuation des échos d'un signal audionumérique engendré par un codeur hiérarchique multicouche, conforme à l'objet de la présente invention, équipé de moyens d'atténuation de l'écho et d'inhibition de l'atténuation d'écho ;

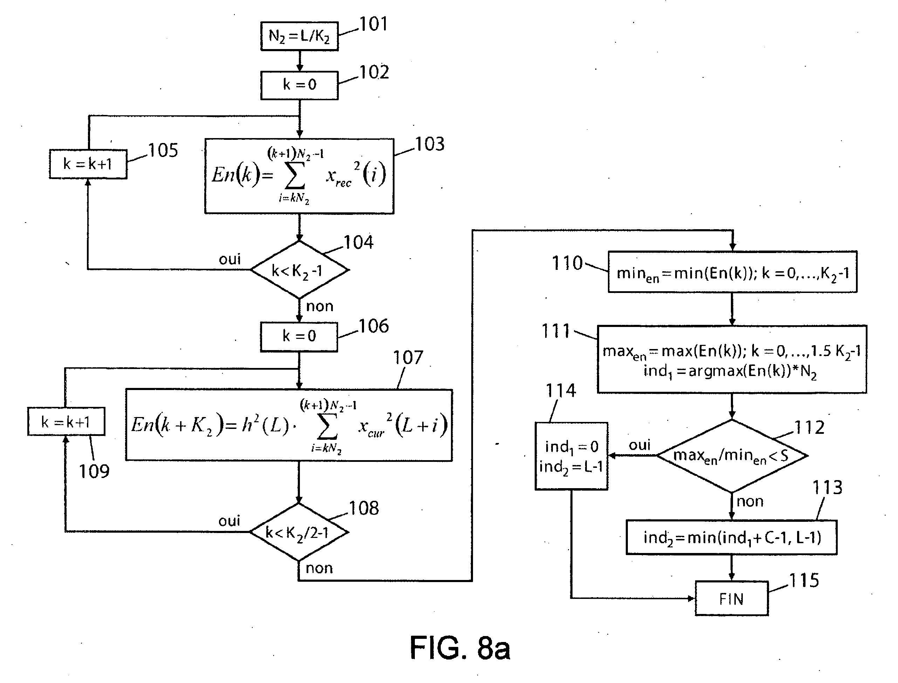

- la figure 8a représente, à titre illustratif, un organigramme de calcul de la plage d'échantillons d'inhibition de l'atténuation des pré-échos ;

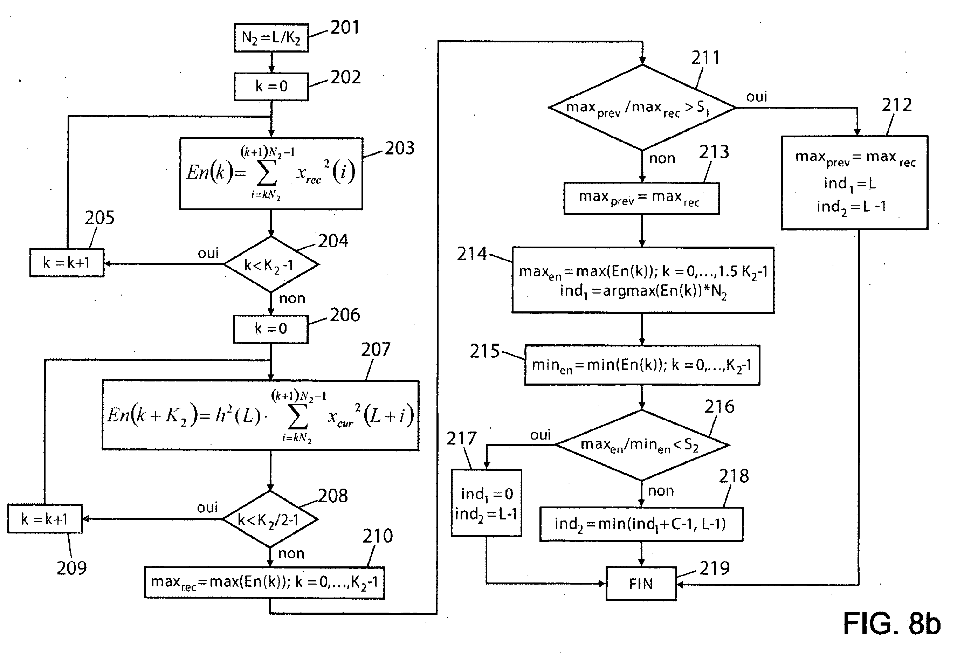

- la figure 8b représente, à titre illustratif, un organigramme de calcul de la plage d'échantillons d'inhibition de l'atténuation des pré-échos et post-échos ;

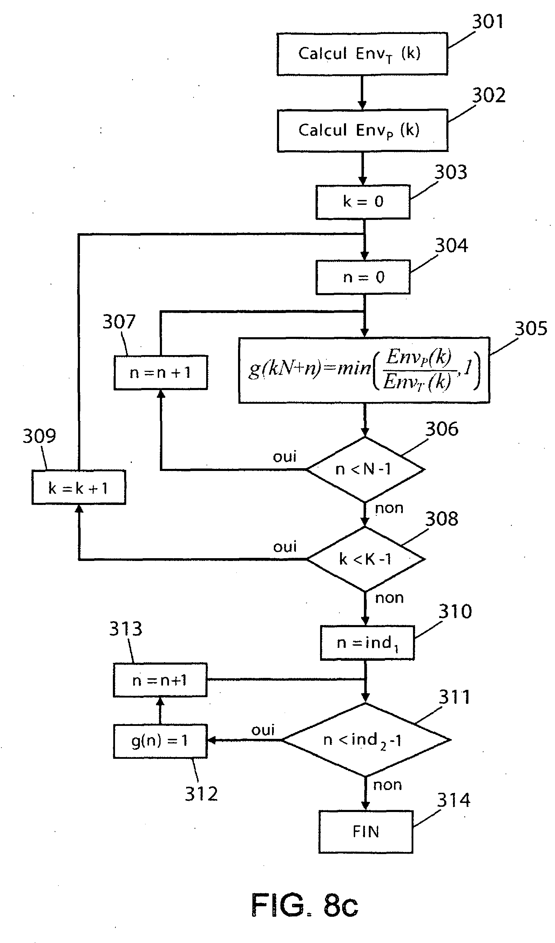

- la figure 8c représente, à titre illustratif, un organigramme de la mise en oeuvre de l'inhibition de l'atténuation des pré-échos ;

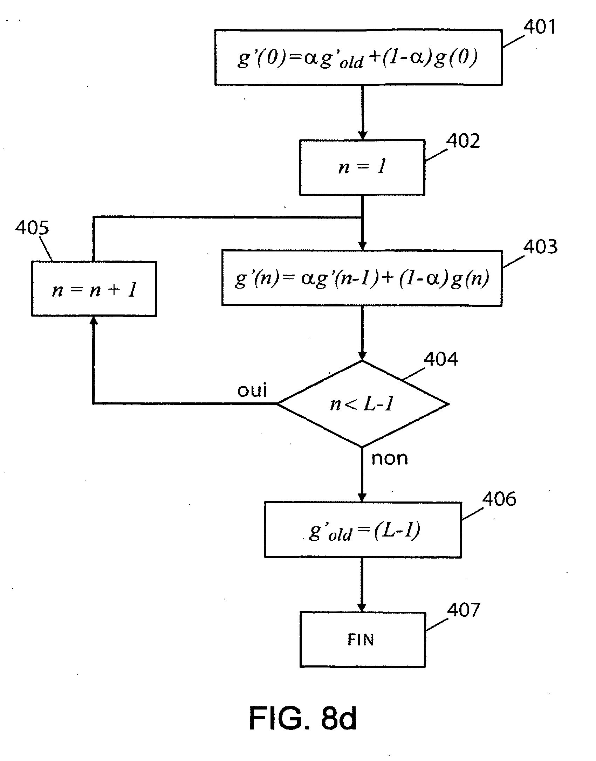

- la figure 8d représente à titre illustratif, un organigramme de lissage des facteurs de gain ;

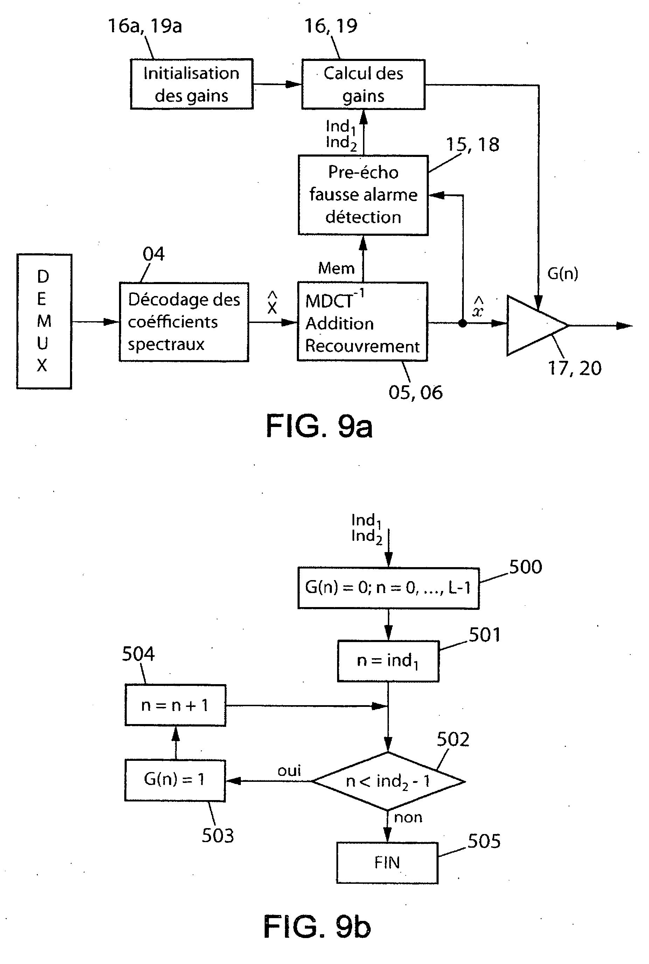

- la figure 9a représente, à titre illustratif, un schéma synoptique d'un module de définition d'une zone de fausse alarme ;
- la figure 9b représente, à titre illustratif, un organigramme de calcul des gains dans le sous-module de calcul des gains de la figure 9a.

Une description plus détaillée du procédé objet de l'invention sera maintenant donnée en liaison avec les figures 2b et 3a.

Le procédé objet de l'invention permet de discriminer les échos d'un signal audionumérique au décodage, lorsque ce signal audionumérique est engendré par codage hiérarchique multicouches à partir d'un codage par transformée et d'un codage prédictif.

En référence à la figure 2b on désigne par :

- $x_{Tj}(n)$ le signal délivré par un décodage par transformée inverse délivré par un décodeur par transformée de couche j d'un décodeur hiérarchique multicouches ;

- $x_{Pi}^{a}(n)$ le signal délivré par un décodage prédictif exécuté par un décodeur prédictif de couche i dans le décodeur hiérarchique correspondant. Le signal $x_{Pi}^{a}(n)$ peut être soit le signal de sortie du décodeur prédictif non générateur d'écho soit une version filtrée de ce signal soit une représentation de l'énergie à court terme de ce signal.

En référence à la figure 2a, à la figure 2b et à la figure 3a, on indique que le procédé, objet de l'invention, consiste en une étape A à comparer en temps réel la valeur du rapport R(k) de l'amplitude du signal issu d'un décodage générateur d'échos à l'amplitude du signal issu d'un décodage non générateur d'écho à une valeur de seuil S.

Sur la figure 3a on indique que l'amplitude du signal issu d'un décodage générateur d'écho est notée $Env_{Tj}(k)$ et l'amplitude du signal issu d'un décodage non générateur d'écho est notée $Env_{Pi}(k)$.

En référence à la notation indiquée, on comprend, en particulier, que l'amplitude du signal issu d'un décodage générateur d'écho et l'amplitude du signal issu d'un décodage non générateur d'écho peut être avantageusement représentée par le signal enveloppe du signal de décodage générateur d'échos $x_{Tj}(n)$ respectivement du signal issu d'un décodage non générateur d'écho $x_{Pi}^{a}(n)$.

Sur la figure 3a, l'obtention du signal d'amplitude est représentée par les relations :

$$x_{Tj}(n) \longrightarrow Env_{Tj}(k)$$

$$x_{Pi}^{a}(n) \longrightarrow Env_{Pi}(k).$$

D'une manière générale, on indique que le signal d'amplitude du signal issu d'un décodage générateur d'écho respectivement du signal issu d'un décodage non générateur d'écho peut être représenté non seulement par le signal d'enveloppe précité mais également par tout signal tel que la valeur absolue, ou autre, représentative de l'amplitude précitée.

En référence à la même figure 3a, on indique que le rapport de l'amplitude du signal issu d'un décodage générateur d'écho à l'amplitude du signal issu du décodage non générateur d'écho est représenté par la relation :

$$R(k) = \frac{Env_{Tj}(k)}{Env_{Pi}(k)} \qquad k = 0, K-1$$

En référence aux notations précédentes, on indique que l'étape de comparaison A de la figure 3a consiste à comparer la valeur du rapport R(k) à la valeur de seuil S par comparaison de supériorité et d'égalité.

Si la valeur du rapport précité est supérieure ou égale à la valeur de seuil S, en réponse positive à l'étape A, le test précité permet alors de conclure à l'étape B à l'existence d'un écho issu du codage par transformée dans la trame courante, cet écho étant alors révélé au décodage.

L'existence de l'écho est représentée à l'étape B par la relation :

$$\exists\, écho\; x_{Tj}(n).$$

Sinon, en réponse négative au test de l'étape A, si la valeur du rapport précité est inférieure à la valeur de seuil S le test de l'étape A permet alors de conclure, à l'étape C, à la non existence d'un écho issu du codage par transformée dans la trame courante.

Cette relation est notée à l'étape C par :

$$\nexists\, écho\; x_{Tj}(n).$$

D'une manière particulièrement avantageuse, conformément à la mise en oeuvre du procédé objet de l'invention, on indique que la position d'origine de l'écho dans la trame courante est donnée en fait par la position, dans la trame courante, de la valeur du rapport sensiblement égale à la valeur de seuil S.

La valeur précitée est donnée à l'étape B de la figure 3a par la relation :

$$\text{Pos } k|R(k)=S.$$

D'une manière générale, en ce qui concerne la mise en oeuvre du test de l'étape A et finalement des test C et B de la figure 2b ou 3a, en particulier de l'étape B consécutivement à l'étape A, on comprend que le calcul de la valeur du rapport R(k) peut être effectué comme une valeur lissée sur la trame courante, de façon à comparer en temps réel la valeur du rapport précité à la valeur de seuil S. Lorsque la valeur du rapport précité est égale à la valeur de S, alors la position d'origine de l'écho est donnée par la valeur particulière du rang k de l'échantillon correspondant du signal décodé dans la trame courante.

L'étape B, en présence d'échos est suivie d'une étape D consistant à discriminer l'existence d'échos dans les parties du signal audionumérique à basse énergie, noté XT$j(n)_{low}$. Les échos correspondants sont notés EXT$j(n)_{low}$. En outre, l'étape D permet, à partir de la discrimination précitée de définir une zone de fausse alarme, correspondant aux zones non discriminées de la trame courante.

Suite à la discrimination à l'étape D, une étape E est exécutée, laquelle consiste à déterminer un traitement initial des échos avec des valeurs de gain d'atténuation et à atténuer les échos dans les parties du signal audionumérique à basse énergie. L'étape E est suivie d'une étape F consistant à inhiber l'atténuation des échos dans les parties du signal audionumérique à forte énergie, noté XT$j(n)_{hiw}$.

D'une manière générale, le procédé objet de l'invention peut être mis en oeuvre en exécutant la discrimination et l'atténuation des échos dans plusieurs bandes de signal avec, comme exemple non limitatif, le cas de deux bandes de fréquences, la bande basse [0-4 kHz] et la bande haute [4-8 kHz]. Dans cet exemple, on met en oeuvre un codeur multicouche temporel/transformé dans chaque bande du signal. Dans la bande basse, le codeur par transformée quantifie la différence entre le signal original et le signal CELP décodé dans le domaine perceptuel (après filtrage par le filtre perceptuel W(z)), alors que dans la bande haute il quantifie le signal original sans filtrage perceptuel et, au décodage, les bandes correctement décodées remplacent les bandes déjà décodées issues de la MDCT du signal temporel fourni par le module d'extension de bande. On décrira donc l'apport de l'invention pour le dispositif de chaque sous-bande.

La figure 3b montre les signaux audio intervenant dans la synthèse de la bande basse du signal dans un décodeur prédictif CELP/transformé multicouche du type de celui décrit par la figure 2a. On peut constater que l'étage de décodage prédictif/CELP ne produit pas d'écho, contrairement à l'étage de sortie par transformée (signal de sortie du décodeur TDAC pour Time Domain Aliasing Cancellation en anglais, banc de filtres à reconstruction parfaite) qui, lui, est sujet à l'apparition de l'écho sous la forme d'un pré-écho entre les échantillons n=0 à n=85. Il en ressort donc que l'étage de sortie du codeur prédictif CELP peut être utilisé, combiné à la sortie de l'étage de décodage par transformée pour atténuer l'écho.

Le signal de sortie final résultant de l'addition du signal CELP décodé et du signal transformé décodé est lui aussi le siège du même phénomène d'écho.

Lorsque que l'on active un dispositif d'atténuation d'écho de la technique antérieure (par exemple celui de la figure 2b), on obtient les signaux de la figure 3c. Les 3 premiers tracés représentent les mêmes signaux que ceux de la figure 3b. Les 3 tracés suivants représentent respectivement :

- le gain de traitement du pré-écho (rectangle 1 sur la figure 2b) ayant une valeur comprise entre 0 et 1.
- le signal en sortie de l'étage de décodage par transformée (sortie du décodeur TDAC) après traitement des pré-échos. On constate que si l'écho qui précède l'attaque a été éliminé, par contre la partie de l'attaque issue du décodeur par transformée a été atténuée à tort. Un intérêt primordial du procédé et du dispositif objets de l'invention est de pallier cet inconvénient.
- le signal de sortie final, somme du signal de sortie du décodeur CELP et de la sortie du décodeur TDAC, qui ne présente pas de pré-écho mais dont l'attaque a quasiment disparu, ce qui se traduit à l'écoute par une dégradation du signal audionumérique.

Le procédé et le dispositif objets de l'invention permettent de remédier à l'atténuation erronée de la sortie du ou des étages de décodage par transformée de la technique antérieure, ainsi qu'illustré sur la figure 3d. Sur cette figure, les sorties audio sont les mêmes que sur la figure précédente.

En comparant la figure 3c et la figure 3d, on constate que le procédé objet de l'invention permet d'inhiber l'atténuation de l'écho au moment de l'attaque (échantillons 80 à 120) tout en éliminant l'écho avant l'attaque (voir gain de traitement pré-écho). Il en résulte que le signal restitué en sortie du décodeur TDAC après traitement des pré-échos, n'a plus d'écho et qu'une bonne restitution de l'attaque est obtenue. Il en est de même pour le signal de sortie final obtenu par sommation de ce signal avec la sortie du décodeur CELP et qui ne présente plus d'écho.

Le processus de génération du gain de traitement d'écho est maintenant expliqué en référence à la figure 4a et à la figure 4b.

S'il y a de l'écho, c'est que l'énergie d'une partie du signal dans une fenêtre MDCT doit être nettement supérieure (attaque) à celle des autres parties. L'écho est observé dans les parties à basse énergie, il faut donc atténuer les échos uniquement dans ces parties et pas dans les zones à forte énergie.

Deux cas sont possibles : L'attaque se trouve soit dans la trame courante soit dans la trame suivante. Dans le premier cas, il y a un risque d'atténuation à tort des échos.

La figure 4a représente, en référence à la figure 2f, le dit signal concaténé pour les échantillons n = 0 à 2L-1. Pour les échantillons n=0 à n=L-1 (L=160) il est égal au signal reconstruit de la trame courante, et pour les échantillons n=L à n=2L-1 il est égal à la deuxième partie de la trame courante. Dans la trame suivante, cette deuxième partie devient la trame précédente correspondant au signal $x_{prev}(n+L)$.

Le processus de correction de l'atténuation des échos objet de l'invention délivre deux indices, $ind_1$, et $ind_2$, le début et la fin d'une éventuelle zone où il faut inhiber l'action du dispositif de l'art antérieur de réduction des échos. $ind_1, > ind_2$, signale qu'il n'y a pas de telle zone dans la trame courante.

Une description plus détaillée d'un mode de réalisation préférentiel non limitatif du procédé objet de l'invention sera maintenant donnée en liaison avec les figures 4a.et 4b.

Selon le mode de mise en oeuvre précité, représenté en figure 4a, le procédé objet de l'invention consiste à :

- découper le signal de la figure 4a en 2 $K_2$ sous-blocs de longueur $N_2 = L / K_2$

- calculer l'énergie de chacun des sous-blocs de longueur $N_2$ du signal représenté sur la figure 4a. A noter, du fait de la symétrie de la deuxième moitié du signal que, seule l'énergie des premiers 1.5 $K_2$ blocs doit être calculée.

Il consiste en outre :

- à calculer l'indice $ind_1$ du premier échantillon du bloc d'énergie maximum,
  et
- à calculer l'énergie minimale sur les $K_2$ premiers blocs du signal reconstruit $x_{rec}(n)$.

Lorsque le rapport de l'énergie maximale sur l'énergie minimale est supérieur à une valeur de seuil S, il y a un risque de pré-écho, mais uniquement dans la zone à faible énergie. Il n'y a pas d'écho à partir des échantillons de forte énergie.

Pour un dispositif de détection d'échos de la technique antérieure atténuant l'écho, il faut inhiber l'action d'atténuation de ce dernier sur les échantillons de forte énergie délimités par les indices $ind_1$ et $ind_2$ définissant la zone du signal comportant les échantillons de forte énergie en remettant le gain à la valeur 1. Ces deux indices dont l'expression apparaît en bas de la figure 4a sont déterminés de la façon suivante:

- $ind_1$, est l'indice du premier échantillon du bloc où se produit le maximum d'énergie,
- $ind_2$, est le minimum entre $ind_1$, + C-1 et L-1 l'indice de la fin du bloc traité. - C est la longueur maximale de la zone de fausse alarme en nombre d'échantillons, fixé à une valeur de l'ordre de la durée d'un bloc ou plus. A titre exemple, une valeur de C=80 donne de bons résultats.

Dans l'exemple de la figure 4a, il n'y a pas d'inhibition de l'atténuation d'écho, car l'attaque causant le pré-écho est détectée dans la trame suivante, $ind_1$, étant supérieur à $ind_2$. Il en résulte que l'écho est correctement atténué sur toute la trame courante, sur les échantillons de n=0 à 159.

On procède à un décalage d'une trame de signal (L=160 échantillons), ainsi qu'illustré par la figure 4b, l'attaque se trouvant donc maintenant dans la trame courante.

L = 160; $K_2$ = 4; N2 = L / $K_2$ = 40; C = 80

Dans cette situation, on reprend la procédure de calcul des maxima et des minima d'énergie décrite précédemment.

Il apparaît que le maximum d'énergie est trouvé pour le bloc démarrant à n= 80 et que le rapport de l'énergie maximale sur l'énergie minimale est cette fois assez important, disons supérieur à la valeur de seuil S. A titre exemple, une valeur de S=8 donne de bons résultats.

Dans ce cas il existe un pré-écho avant le maximum d'énergie mais, par contre, le bloc où se trouve le maximum et quelques blocs suivant ne sont pas sujets au phénomène d'écho. Conformément au procédé objet de l'invention, il faut donc inhiber l'activation de l'atténuation d'écho au moment de l'attaque et après. C'est ce qui est fait pour les échantillons allant de

n=80 à 159 sur la figure 4b, la zone comprise entre les échantillons n=80 à 159 précités étant définie comme zone de fausse alarme.

En conséquence, sur la figure 3d, on obtient un gain (lissé) pratiquement égal à 1 pour les échantillons de n = 80 à 120, l'atténuation de gain ayant été inhibée, par comparaison aux mêmes échantillons sur la figure 3c, et les échantillons de n=80 à n=160 du signal en sortie du décodeur TDAC après le traitement des pré-échos, ne sont plus atténués à tort. Il en résulte que le signal de sortie final obtenu par sommation de ce signal avec le signal de sortie du décodeur CELP, est maintenant correctement restitué.

Le procédé objet de l'invention peut en outre être mise en oeuvre dans une variante spécifique pour l'atténuation des échos d'un codeur multicouches de la bande de fréquences basses ou hautes pour des signaux de sinusoïdes, ainsi qu'il sera décrit ci-après en liaison avec la figure 4c.

La figure 4c montre les signaux audio intervenant dans la synthèse du signal dans un décodeur temporel éventuellement prédictif/transformé multicouches de la bande haute du signal audio du type de celui décrit par la figure 2a. Le signal à décoder est une sinusoïde. On constate que la sortie de l'étage de décodage temporel est dégradée par rapport au signal d'entrée. Ceci est dû au fait que, dans le cas présent, le décodeur temporel fonctionne avec un débit trop bas pour permettre une restitution correcte de la sinusoïde. Le signal de sortie du décodeur TDAC est quant à lui correct. Il en est de même du signal de sortie final.

Lorsque le processus d'atténuation d'écho de la technique antérieure, par exemple celui de la figure 2a, est activé, on obtient les signaux de la figure 4d. Les 3 premiers tracés représentent les mêmes signaux que ceux de la figure 4c. Les 3 tracés suivants représentent respectivement:

- le gain de l'atténuation d'écho (rectangle 1 sur la figure 2b), de valeur comprise entre 0 et 1,
- le signal en sortie du décodeur TDAC après traitement de l'écho. On constate que l'atténuation des échos a été activée, ce qui produit un signal de sortie de l'étage TDAC égal à une sinusoïde modulée en amplitude du fait de la multiplication par le gain d'atténuation et qui ne reproduit pas fidèlement la sinusoïde de départ.
- le signal de sortie final qui présente les mêmes défauts que le signal en sortie du décodeur TDAC, ces deux signaux sont identiques.

L'invention permet de remédier à la mauvaise modélisation du signal comme décrit sur la figure 4e.

Le fonctionnement de l'inhibition de l'atténuation d'écho en présence de sinusoïdes, sera décrit en référence à la figure 5. On reprend la procédure de calcul des maxima et des minima d'énergie décrite précédemment.

On constate sur la figure précitée qu'il n'y a pas de maximum net d'énergie. Le rapport de l'énergie maximale sur l'énergie minimale est cette fois assez faible, inférieur à la valeur de seuil S. Ceci indique qu'il n'y a pas de présence d'écho. Conformément au procédé objet de l'invention, il faut donc inhiber l'activation de l'atténuation d'écho sur toute la trame. Ceci est représenté pour les échantillons allant de n =0 à n=159 sur la figure 4e où le gain de traitement d'écho est égal à 1 pour ces échantillons. Le signal en sortie du décodeur TDAC après le traitement des pré-échos, n'est plus atténué à tort. Il en résulte que le signal de sortie final identique à ce signal, est maintenant correctement restitué.

Sur la figure 5 :

L = 160; $K_2$ = 4; N2 = L/ $K_2$ =40; C = 80; S = 8

La figure 6 illustre le phénomène de post-échos.

En référence à la figure 6, le phénomène de post-écho peut être observé sur le signal de sortie dans la trame contenant le déclin rapide du signal d'entrée et dans la trame suivante. Dans la trame suivant le fort déclin (zone de post-écho) il ne faut bien entendu pas inhiber l'atténuation d'écho.

La situation de post-écho peut être détectée en vérifiant le rapport entre l'énergie maximale de la trame précédente et de la trame courante. Quand ce rapport est supérieur à une valeur de seuil on considère la trame comme une trame siège de post-échos et on laisse l'algorithme d'atténuation des échos atténuer les échos de cette trame.

Une description plus détaillée d'un dispositif de discrimination et d'atténuation des échos d'un signal audionumérique engendré par un codeur hiérarchique multicouches, conforme à l'objet de la présente invention, sera maintenant donnée en liaison avec la figure 7.

D'une manière générale, on comprend que le dispositif objet de l'invention représenté en figure 7 est intégré à un dispositif de discrimination d'écho de la technique antérieure, tel que représenté en figure 2b.

Il comporte, de manière semblable au dispositif de discrimination de la technique antérieure, un module de calcul de l'existence de la position d'origine de l'écho et de valeur d'atténuation recevant d'une part le signal auxiliaire

$x_{pi}^a(n)$ délivré par la deuxième sortie du décodeur prédictif de rang i d'une pluralité de décodeurs prédictifs et, d'autre part, le signal décodé $x_{Tj}(n)$ délivré par la sortie d'un décodeur par transformée inverse de rang j de la pluralité de décodeurs par transformée inverse.

En outre, afin d'assurer l'atténuation des échos indésirables, il comporte un module d'atténuation de l'écho recevant le signal reconstruit de la trame courante délivré par le décodeur par transformée inverse de rang j et un signal de présence, de position d'origine d'écho et de valeur d'atténuation d'écho applicable.

Ainsi, sur la figure 7, on a représenté un décodeur prédictif de rang i et un décodeur par transformée, décodeur MDCT de rang j, de manière non limitative selon l'architecture précédemment décrite.

Un mode de réalisation préférentiel non limitatif d'un dispositif de discrimination et d'atténuation des échos d'un signal audionumérique engendré par un codeur hiérarchique multicouche, conforme à l'objet de la présente invention, sera maintenant donné en liaison avec la figure 7.

Le dispositif objet de l'invention tel que représenté en figure 7 reprend l'architecture du dispositif de la technique antérieure telle que représentée en figure 2b mais en précise les éléments spécifiques.

En particulier, ainsi que représenté sur la figure 7, la structure de calcul d'existence et de la position d'origine d'écho dans au moins une bande de fréquences basses et/ou une bande de fréquences hautes, de la trame courante comprend avantageusement, connectée à un démultiplexeur 00 du dispositif, une voie de décodage en bande de fréquences basses du signal audionumérique, notée Voie L, et une voie de décodage en bande de fréquences hautes du signal audionumérique notée, Voie H.

En outre, un circuit sommateur 14 reçoit le signal délivré par la voie de décodage en bande de fréquences hautes, Voie H, respectivement par la voie de décodage en bande de fréquences basses, Voie L, et délivre un signal audionumérique reconstitué.

On comprend en particulier à l'observation de la figure 7, que les voies hautes et basses correspondent sensiblement au décodeur prédictif de rang i respectivement au décodeur par transformée de rang j de la structure de la technique antérieure représentée en figure 2b.

En particulier, ainsi que représenté sur la figure 7, la voie de décodage en bande de fréquences basses, Voie L, inclut avantageusement un module de décodage prédictif 01 recevant le train binaire audionumérique démultiplexé et délivrant un signal décodé par décodage prédictif et un module de décodage par transformée 04 recevant le train binaire audionumérique démultiplexé et délivrant des coefficients spectraux du signal de différence codé noté $\hat{X}_{lo}$, en bande de fréquences basses.

La voie de décodage en bande de fréquences basses, Voie L, comporte en outre un module de transposition fréquence-temps par transformée inverse 05 recevant des coefficients spectraux du signal de différence codé $\hat{X}_{lo}$, en bande de fréquences basses, et délivre le signal audionumérique en bande de fréquences basses noté $\hat{x}_{lo}$.

En outre, les ressources de discrimination de l'existence d'écho dans les parties du signal basse énergie et les ressources d'inhibition d'atténuation spécifiques à la voie de décodage en bande de fréquences basses, Voie L, comportent, ainsi que représenté sur la figure 7, un module de définition d'une zone de fausse alarme 15 et un module de détection d'écho 16 à partir du signal audionumérique en bande de fréquences basses $\hat{x}_{lo}$, et du signal décodé par décodage prédictif. Le module de détection d'écho 16 délivre un signal de valeur de gain aux fréquences basses noté $G_{lo}$.

Enfin, la voie de décodage en bande de fréquences basses, Voie L, comporte un circuit d'application 17 de la valeur de gain aux fréquences basses $G_{lo}$ au signal décodé par transformée et filtré par $W_{NB}(z)^{-1}$, une ressource d'addition 08, une ressource de postfiltrage 09, une ressource de sur-échantillonnage 10 et de filtrage de synthèse QMF 11, ces différents éléments étant connectés en cascade et délivrant un signal de synthèse de la bande de fréquences basses audionumérique au sommateur 14.

En outre, ainsi que représenté également en figure 7, la voie de décodage en bande de fréquences hautes, Voie H, inclut avantageusement une voie d'extension de bande 02 recevant le train binaire audionumérique démultiplexé et délivrant un signal de référence temporel exempt de pré-écho. Ce signal sert de référence à la voie de décodage en bande de fréquences hautes et joue sensiblement le rôle du décodage prédictif pour la voie décodage en fréquence basse Voie L.

La voie de décodage en bande de fréquences hautes Voie H comporte en outre le module de décodage par transformée 04 lequel reçoit le train binaire audionumérique démultiplexé et des coefficients spectraux du signal de référence temporelle par l'intermédiaire d'un transposition temps-fréquence par transformée MDCT 03, lequel permet de délivrer les coefficients spectraux du signal de références temporelles aux fréquences hautes, noté $\hat{X}_{hi}$, au module de décodage par transformée 04.

Ce dernier délivre les coefficients spectraux du signal audionumérique codé en bande de fréquences hautes notés $\hat{X}_{hi}$.

La voie de décodage en bande de fréquences hautes du signal audionumérique, Voie H, comporte également un module de transposition fréquence-temps par transformée inverse 06 l'opération de transformée inverse étant notée MDCT$^{-1}$, suivi de l'opération addition-recouvrement notée "add/rec" recevant les coefficients du spectre du signal audionumérique $\hat{X}_{hi}$ en bande de fréquences hautes et délivre le signal audionumérique temporel en bande de fréquences hautes noté $\tilde{x}_{hi}$.

De manière semblable à l'architecture de la voie de décodage en bande de fréquences basses, des ressources de définition d'une zone de fausse alarme de pré-écho 18 et de détection de pré-écho 19 formant les ressources d'inhibition de l'atténuation des échos sont prévues. Ces derniers sont constitués par un module 18 de définition d'une zone de fausse alarme et de détection d'écho 19 à partir du signal audionumérique en bande de fréquence haute $\hat{x}_{hi}$ et du signal en sortie du module d'extension de bande, le module de détection des échos en particulier des pré-échos 19 délivrant un signal de valeur de gain aux fréquences hautes, noté $G_{hi}$.

Enfin un circuit 20 de l'application de la valeur de gain aux fréquences hautes au signal audionumérique en bande de fréquences hautes est prévu, suivi d'un circuit de sur-échantillonnage 12 et de filtrage passe haut 13 délivrant un signal de synthèse en bande de fréquences hautes du signal audionumérique au circuit sommateur 14.

Le mode opératoire du dispositif objet de l'invention représenté en figure 7 est le suivant. Les bits décrivant chaque trame de 20 ms sont démultiplexés dans le démultiplexeur 00. On expose ici le décodage qui fonctionne de 8 à 32 kbit/s. En pratique, le flux binaire a les valeurs de 8, 12, 14 puis entre 14 et 32 kbit/s le débit peut être choisi à la demande.

Le flux binaire des couches à 8 et 12 kbit/s est utilisé par le décodeur CELP pour engendrer une première synthèse en bande étroite (0-4000 Hz). La portion du flux binaire associé à la couche à 14 kbit/s est décodée par le module d'extension de bande 02. Le signal temporel obtenu en bande haute (4000-7000 Hz) est transformé par le module MDCT 03 en un spectre $\hat{X}_{hi}$. La partie variable du débit reçu (de 14 à 32 kbit/s) commande le décodage des coefficients MDCT du signal de différence de la bande basse et du signal de remplacement de la bande haute, module de décodage des coefficients MDCT 04, qui ont été codés par ordre d'importance perceptuelle. En bande basse, le spectre du signal de différence codé $\hat{X}_{lo}$ contient les bandes de spectre reconstruites et des zéros pour les bandes non décodées qui n'ont pas été reçues au décodeur. En bande haute, $\hat{X}_{hi}$ contient la combinaison du spectre issu de l'extension de bande $\tilde{X}_{hi}$ et des bandes de spectres des coefficients MDCT de la bande haute codés directement. Ces 2 spectres sont ramenés dans le domaine temporel $\hat{x}_{lo}$ et $\hat{x}_{hi}$ par les modules de transposition fréquence-temps par MDCT inverse et addition/recouvrement 05 et 06.

Les modules 15 et 18 déterminent la zone éventuelle où il faut inhiber l'atténuation de l'écho de la technique antérieure dans la trame reconstruite.

Comme expliqué précédemment, le module 15 reçoit comme signal d'entrée le signal reconstruit de la trame courante $\hat{x}_{lo}$, et la deuxième partie de la trame courante, désignée $Mem_{lo}$ sur la figure 7.

La figure 8a et la figure 8b montrent deux exemples d'organigrammes pour l'exécution de la fonction du module 15. La sortie du module 15 consiste en deux indices, définissant le début et la fin de la zone où il ne faut pas appliquer l'atténuation d'écho et désignée zone de fausse alarme. Si ces deux indices sont identiques, ceci implique qu'il ne faut pas modifier l'atténuation des échos selon la technique antérieure dans la trame courante.

Le bloc 07 effectue le filtrage perceptuel inverse, de celui effectué au codeur, de la sortie du décodeur par transformée inverse 05. En fonction du rapport entre l'enveloppe de ce signal et celle du signal de sortie du décodeur CELP, le module 16 détermine les gains d'atténuation de pré-échos, en tenant également compte des indices obtenus dans le module 15 de la présente invention. Dans le module 16, certaines plages de valeurs du gain sont remises à 1 et permettent, en fait, d'inhiber les valeurs de gains établies selon la technique antérieure, en les remettant à la valeur 1, état où il n'y a pas d'atténuation d'écho.

Un exemple de réalisation du module 16 est donné par l'organigramme de la figure 8c qui combine l'état de la technique antérieure et la correction apportée conformément à la présente invention, blocs 310 à 313 de la figure 8c. Le module 16 comporte également un module de lissage des gains par filtrage passe bas dont un exemple de réalisation est donné en relation avec la figure 8d.

Le module 17 applique le gain calculé par le module 16 sur le signal de sortie du décodeur par transformée, filtré par le filtre perceptuel inverse 07, pour donner un signal avec écho atténué. Ce signal est ensuite additionné par un sommateur 08 au signal de sortie du décodeur CELP pour donner un nouveau signal qui, postfiltré par le module de post-filtrage 09 est le signal reconstitué de la bande basse. Après sur-échantillonnage 10 et passage dans le filtre QMF de synthèse 11 de la bande basse, ce signal est additionné à celui de la bande haute par le sommateur 14 pour donner le signal reconstitué.

En bande haute, le fonctionnement du module 18 est identique à celui du module 15. A partir de $\hat{x}_{hi}$, le signal reconstruit de la trame courante et de la deuxième partie de la trame courante, désigné $Mem_{hi}$ sur la figure 7, le module 18 détermine le début et la fin de la zone où il ne faut pas appliquer l'atténuation d'écho.

En fonction du rapport de l'enveloppe du signal de sortie de la transposition fréquence-temps 06 et de la sortie de l'extension de bande 02, le module 19 détermine les gains d'atténuation de pre-échos, en tenant également compte des indices obtenus par le module 18, organigrammes de la figure 8a et de la figure 8b, pour lesquels les gains sont mis à une valeur 1 conformément à l'invention figure 8c. Les gains obtenus sont ensuite lissés par filtrage passe bas figure 8d. Le module 20 applique le gain calculé par le module 19 sur le signal combiné $\hat{x}_{hi}$ de la sortie de la transposition fréquence-temps 06.

Le signal de sortie en bande élargie, échantillonné à 16 kHz, est obtenu par addition 14 des signaux de la bande basse synthétisée par sur-échantillonnage 10 et filtrage passe-bas 11 et de la bande haute synthétisée également par sur-échantillonnage 12 et filtrage passe-haut 13.

Le fonctionnement de l'inhibition de l'atténuation des échos exécutée par les modules 15 et 18 de la figure 7 est décrit en liaison avec l'organigramme de la figure 8a, en référence aux explications relatives à la figure 4a, la figure 4b et la figure 4c.

La première partie de l'organigramme autour de l'étape référencée 103 consiste à calculer l'énergie des $K_2$ sous-blocs du signal reconstruit $x_{rec}(n)$ après addition/recouvrement. $x_{rec}(n)$ sur cet organigramme correspond respectivement aux signaux $\hat{x}_{lo}$ et $\hat{x}_{hi}$ de la figure 7.

La partie suivante autour de l'étape référencée 107 consiste à calculer l'énergie de chaque sous-bloc de la deuxième partie de la trame courante, en sortie de la MDCT inverse. Seules $K_2/2$ valeurs sont différentes du fait de la symétrie de cette partie du signal.

Le minimum d'énergie $min_{en}$ est calculé sur les $K_2$ sous-blocs du signal reconstruit étape 110. Le maximum des énergies des sous-blocs de signal $x_{rec}(n)$ et $x_{cur}(n)$ est calculé à l'étape 111 sur les $K_2 + K_2/2$ blocs.

La dernière partie de l'organigramme représenté en figure 8a consiste à calculer les index $ind_1$ et $ind_2$ qui permettent de remettre le gain d'atténuation d'écho à la valeur 1, l'atténuation de gain de la technique antérieure étant ainsi inhibée. Pour cela on calcule le rapport de l'énergie maximale à l'énergie minimale et on la compare à une valeur de seuil S à l'étape 112. Si le rapport est inférieur à la valeur seuil S, alors $ind_1$ est mis à 0 et $ind_2$ est mis à L-1, c'est-à-dire que l'on remet ultérieurement le gain à 1 dans toute la trame courante, sur la plage n=0 à n=L-1. En effet la différence entre les énergies est faible et il n'y a donc pas d'attaque. Sinon, on instancie $ind_2$ à la valeur $ind_1$ + C - 1, C étant un nombre déterminé d'échantillons. On sélectionne ainsi une plage d'échantillons sur laquelle on remet le gain à 1, en provoquant l'inhibition de l'atténuation du gain d'écho sur cette plage d'échantillons où se trouve l'attaque. Si la valeur $ind_2$ dépasse la longueur de la trame (L), on la met à L-1 ; $ind_2$ pointe sur le dernier échantillon de la trame.

La procédure selon l'organigramme de la figure 8a inhibe à tort l'atténuation de post-échos. Dans le cas d'un post-écho, l'attaque se trouve dans la trame précédente alors que dans la trame courante et la trame suivante l'énergie peut être assez homogène. En plus, cette énergie décroît généralement. Pour une de ces deux raisons, une fausse alarme est détectée à tort par la procédure de la figure 8a.

Pour conserver le traitement d'atténuation de post-échos intact, une modification est appliquée sur la procédure représentée en figure 8a. L'organigramme modifié de calcul de la plage d'échantillons d'inhibition de l'atténuation des pré- et post-échos, est alors décrit dans la procédure modifiée en référence à la figure 8b.

La première partie de l'organigramme de la figure 8b jusqu'à l'étape référencée 208 est analogue à la partie de l'organigramme de la figure 8a jusqu'à l'étape référencée 108 sur cette dernière.

La partie suivante prend également en compte les cas de post-écho où il ne faut pas inhiber l'activation de l'atténuation de gain des post-échos.

On calcule d'abord max*rec*, le maximum d'énergie sur les $K_2$ blocs du signal reconstitué à l'étape 210. Ayant gardé en mémoire le maximum d'énergie de la trame précédente max*prev*, on compare ensuite le rapport de max*prev* au maximum courant max*rec*. Lorsque le rapport est supérieur à une valeur de seuil $S_1$, alors on est en situation de post-écho et il ne faut pas inhiber l'atténuation des post-échos. En conséquence on stocke *max*$_{rec}$ pour la trame suivante et on instancie *ind*$_1$ à L et *ind*$_2$ à L-1, étape 212, et la procédure est terminée. Sinon, on stocke max*rec* pour la trame suivante à l'étape 213. On calcule ensuite max*en*, le maximum d'énergie sur l'ensemble des 1.5 $K_2$ blocs du signal concaténé ainsi que l'indice de début du bloc à l'énergie maximale, étape 214. On calcule ensuite l'énergie minimale, puis on compare le rapport du maximum d'énergie au minimum de façon analogue à celle de l'organigramme de la figure 8a, étapes 112, 113, 114 et 115. Dans le cas où le rapport est inférieur à la valeur de seuil, *ind*$_1$ est mis à 0 et *ind*$_2$ à L-1, c'est-à-dire que l'on inhibe l'atténuation d'écho en mettant le gain à 1 sur la plage d'échantillons de 0 à L-1, soit sur toute la trame. Dans le cas contraire, on affecte à *ind*$_2$ la valeur *ind*$_1$ + C - 1, C étant un nombre d'échantillons fixés, le gain est instancié ensuite à la valeur 1 sur la plage d'échantillons de *ind*$_1$ à *ind*$_2$. Si la valeur d'*ind*$_2$ dépasse la longueur de la trame (L), on l'instancie à L-1, *ind*$_2$ pointe alors sur le dernier échantillon de la trame.

L'inhibition de l'atténuation des échos sur la plage de fausse alarme sera maintenant décrite en liaison avec la figure 8c. L'organigramme de la figure 8c, reprend, en première partie, l'organigramme de la figure 2d de la technique antérieure pour le calcul de l'atténuation de l'écho.

Les étapes 301 de calcul de l'enveloppe du signal issu du codeur par transformée et 302 de calcul de l'enveloppe du signal issu du codeur temporel ont été rajoutées en début d'organigramme. Ensuite, la partie essentielle qui a été ajoutée sur la figure 8c par rapport à la figure 2d se rapporte aux étapes 310 à 314 de la figure 8c. Cette partie concerne la mise à la valeur 1, entre les échantillons *ind*$_1$ et *ind*$_2$, du gain d'atténuation d'écho.

Conformément au procédé objet de l'invention, la plage *ind*$_1$ à *ind*$_2$ a été déterminée comme la plage d'échantillons où l'activation de l'atténuation d'écho de la technique antérieure fonctionne à tort et doit donc être modifiée comme décrit précédemment.

Pour la mise en oeuvre du processus illustré par la figure 8c, en fait, le facteur de gain initial *g*(*n*) est lissé à chaque échantillon du signal par un filtre récursif du premier ordre pour éviter les discontinuités. La fonction de transfert du filtre de lissage est donnée par:

$$g(z) = \frac{\alpha}{1 - \alpha z^{-1}}$$

D'où, l'équation de filtrage dans le domaine temporel:

$$g'(n) = \alpha\, g'(n-1) + (1-\alpha)\, g(n)$$

Dans les relations précédentes $\alpha$ est une valeur réelle comprise entre 0 et 1.

En effet, ce gain initial est calculé tous les $k_2$ échantillons (typiquement $k_2$ = 40) et sa valeur est répétée pour tous les échantillons du sous-bloc, ce qui lui donne une allure en marche d'escalier, d'où l'utilité du lissage décrit par l'organigramme de la figure 8d. Le lissage du gain d'atténuation d'écho apparaît clairement, à titre d'exemple, sur la figure 3d avec une remontée douce du gain d'une faible valeur à la valeur 1.

On peut noter que les modules de définition d'une zone de fausse alarme 15 et/ou 18 fonctionnent avec uniquement comme signaux d'entrée les signaux issus de la transformation inverse pour l'addition/recouvrement. Ce module peut être mis en oeuvre dans tout décodeur (hiérarchique ou non, multi-bande ou non) utilisant une transformation inverse par addition/recouvrement pour générer le signal reconstruit pour fiabiliser la décision initiale d'atténuation d'écho donné par un autre dispositif.

Un exemple de mise en oeuvre est illustré par la figure 9a ci-après. L'initiation des gains peut venir de tout autre méthode de calcul de gain d'atténuation des échos.

Sur la figure 9a les références doubles 05, 06 ; 15, 18 ; 16a, 19a et 17, 20 désignent en fait les éléments correspondants de la figure 7, pour le module de définition d'une zone de fausse alarme 15 respectivement 18. En outre, un sous-module d'initialisation des gains 16a, 19a est ajouté.

Un exemple de réalisation du calcul des gains initiaux est donné en référence à la figure 9b ci-après. Dans ce cas les gains sont initialement mis à zéro et la procédure d'inhibition de l'atténuation des échos est utilisée pour remettre à 1 le gain dans toutes les zones où l'écho n'est pas présent.

Les sous-étapes correspondantes comprennent, tant pour le module de définition d'une zone de fausse alarme 15 que 18, une sous étape 500 d'initialisation du gain G(n) du rang de l'échantillon n à la valeur zéro, une étape d'instanciation 501 du rang de l'échantillon traité n à la première valeur d'indice $ind_1$, une étape 502 de test, de comparaison d'infériorité du rang n à la deuxième valeur d'indice diminuée de 1.

Tant que cette valeur n'est pas atteinte la valeur de gain G(n) est modifié à la valeur 1, 503, et l'on passe à l'échantillon dé rang suivant 504, par n = n + 1, la sous étape 502 l'opération de modification du gain est terminée.

Le procédé objet de l'invention utilise un exemple particulier de calcul du début de l'attaque (recherche du maximum d'énergie par sous-bloc) mais peut fonctionner avec toute autre méthode de détermination du début de l'attaque.

Le procédé objet de l'invention et la variante précitée s'appliquent à l'atténuation des échos dans tout codeur par transformée qui utilise un banc de filtre MDCT ou tout banc de filtres à reconstruction parfaite à valeur réelle ou complexe, ou les bancs de filtres à reconstruction presque parfaite ainsi que les bancs de filtres utilisant la transformée de Fourier ou la transformée en ondelettes.

L'invention couvre en outre un programme d'ordinateur comportant une suite d'instructions mémorisées sur un support pour exécution par un ordinateur ou un dispositif dédié, remarquable en ce que lors de l'exécution de ces instructions, ce dernier exécute le procédé objet de l'invention, tel que décrit précédemment en liaison avec les figures 3a à 5b.

Le programme d'ordinateur précité est un programme directement exécutable implanté dans un module de discrimination de l'existence d'échos dans les parties du signal à basse énergie, un module d'atténuation de l'écho et un module d'inhibition de l'atténuation des échos dans les parties du signal à forte énergie de la trame courante, d'un dispositif de détection et d'atténuation d'échos tel que décrit en liaison avec les figures 7 à 8d.

## Revendications

1. Procédé de discrimination et d'atténuation des échos d'un signal audionumérique engendré à partir d'un codage par transformée, générateur d'échos, **caractérisé en ce qu'**il inclut au moins au décodage, pour chaque trame courante de ce signal audionumérique, les étapes suivantes :

   - discriminer (D) une partie à basse énergie de la trame courante précédant une transition vers une partie de forte énergie de la trame courante ;
   - définir une partie de fausse alarme de la trame courante correspondant aux parties non discriminées de la trame courante ;
   - déterminer un traitement initial des échos avec des valeurs de gain d'atténuation de la trame courante ;
   - atténuer (E) les échos selon le traitement initial des échos dans ladite partie discriminée à basse énergie de la trame courante ;
   - inhiber (F) l'atténuation des échos du traitement initial dans la partie de fausse alarme.

2. Procédé selon la revendication 1 **caractérisé en ce que**, le codage comportant également, en parallèle avec l'étage de codage par transformée, générateur d'échos, un étage de codage temporel, non générateur d'échos, la dite détermination du traitement initial des échos consiste, au décodage, pour chaque trame courante de ce signal audionumérique, à :

   - comparer, en temps réel, dans au moins une bande de fréquences, une valeur représentative d'une variable issue d'une caractéristique de l'enveloppe temporelle du signal issu d'un décodage générateur d'écho et d'une variable issue de la caractéristique correspondante du signal issu d'un décodage non générateur d'échos à une valeur de seuil ; et,
   - en fonction du résultat de cette comparaison, conclure à l'existence ou à la non existence d'un écho issu du codage par transformée dans la trame courante; et en cas d'existence d'un écho,
   - déterminer les gains initiaux d'atténuation des échos en fonction des dites variables issues du dit décodage générateur d'écho et du dit décodage non générateur d'échos.

3. Procédé selon la revendication 1 ou 2, **caractérisé en ce que**, une trame courante comprenant une première et une deuxième partie, l'étape qui consiste à définir la partie de fausse alarme, comporte au moins les étapes suivantes :

   - générer un signal concaténé à partir du signal reconstruit ($X_{rec}$) de la trame courante et de la deuxième partie de la trame courante ($X_{cur}$), ledit signal reconstruit étant obtenu par addition de la deuxième partie de la trame précédente et de la première partie de la trame courante après application d'une transposition par transformée inverse ;

EP 2 002 428 B1

- découper ledit signal concaténé en un nombre pair de sous-blocs d'échantillons de longueur déterminée ;
- calculer l'énergie du signal de chacun des sous-blocs de longueur déterminée ;
- calculer le maximum des valeurs d'énergie de tous les sous blocs ;
- calculer le minimum des valeurs d'énergie sur les sous blocs du signal reconstruit ($X_{rec}$) de la trame courante; et,
- lorsque le rapport de l'énergie maximum à l'énergie minimum est inférieur ou égal à une valeur de seuil déterminée, l'absence d'écho étant révélée dans la totalité de la trame courante, affecter le rang du premier échantillon de la trame courante à un premier indice ($ind_1$) et affecter le rang du dernier échantillon de la trame courante à un deuxième indice ($ind_2$) ;
- identifier comme étant ladite partie de fausse alarme, la partie de la trame courante comprenant les échantillons entre lesdits premier et deuxième indices.

4. Procédé selon la revendication 3, **caractérisé en ce que** lorsque ledit rapport de l'énergie maximum à l'énergie minimum est supérieur à ladite valeur de seuil déterminée, un risque de pré-échos étant révélé dans la seule partie à basse énergie du signal, ledit procédé comporte en outre une étape permettant de calculer un premier indice représentatif du rang du premier échantillon de la partie de forte énergie de la trame courante et un deuxième indice représentatif du rang du dernier échantillon de la partie de forte énergie de la trame courante.

5. Procédé selon la revendication 4, **caractérisé en ce que** ledit premier indice est l'indice du premier échantillon du premier sous-bloc à forte énergie.

6. Procédé selon l'une des revendications 3 à 5, **caractérisé en ce que** ledit deuxième indice est calculé comme le minimum entre la valeur du premier indice augmentée de la longueur maximale de fausse alarme en nombre d'échantillons moins un et la valeur de l'indice de l'échantillon de fin de la trame courante traité moins un.

7. Procédé selon l'une des revendications 1 à 6 où ladite inhibition est effectuée par mise à la valeur 1 des valeurs de gains d'atténuation dans ladite partie de fausse alarme en gardant les valeurs de gains initiaux en dehors de la partie de fausse alarme, et application des valeurs de gain d'atténuation résultants aux échantillons du signal reconstruit de la trame courante.

8. Procédé selon la revendication 7, **caractérisé en ce que** lesdites valeurs de gain résultants sont lissées par filtrage avant d'être appliquées sur les échantillons du signal reconstruit de la trame courante.

9. Procédé selon l'une des revendications 1 à 8, **caractérisé en ce que** le rapport du maximum d'énergie de la trame précédente est mémorisé, et

- lorsque le rapport de l'énergie de la trame précédente à l'énergie de la trame courante est supérieur à une valeur de seuil déterminée, un risque de post-échos étant révélé dans la trame courante, ledit procédé consiste en outre à
- atténuer les échos selon le traitement initial des échos dans la trame courante.

10. Dispositif de discrimination et d'atténuation des échos d'un signal audionumérique engendré par un codeur par transformée, susceptible de révéler des échos, **caractérisé en ce que** ledit dispositif comporte au moins au niveau d'un décodeur par transformée :

- des moyens de discrimination d'une partie à basse énergie de la trame courante précédant une transition vers une partie de forte énergie de la trame courante;
- des moyens de définition (15,18) d'une partie de fausse alarme correspondant aux parties non discriminées de la trame courante ;
- des moyens de détermination (16,19) d'un traitement initial des échos avec des valeurs de gain d'atténuation ;
- des moyens d'atténuation (17,20) des échos selon le traitement initial des échos appliqués à la partie discriminée à basse énergie de la trame courante ;
- des moyens d'inhibition (17,20) de l'atténuation des échos du traitement initial appliqué à la partie de fausse alarme.

11. Dispositif selon la revendication 10, **caractérisé en ce que**, pour un signal audionumérique engendré par un codeur hiérarchique multicouches, dans un décodeur, ledit décodeur comportant au moins un décodeur temporel, non générateur d'échos et au moins un décodeur par transformée, susceptible de révéler des échos, ledit dispositif comporte au moins au niveau d'un décodeur temporel et d'un décodeur par transformée :

- un moyen de discrimination de la partie à basse énergie de la trame courante précédant une transition vers une partie de forte énergie de la trame courante délivrant des indices de la partie de la trame courante où il faut inhiber l'atténuation des échos ;
- un moyen de calcul de l'existence et de la position d'origine d'écho dans au moins une bande de fréquences de la trame courante, recevant au moins lesdits indices de la partie de la trame courante où il faut inhiber l'atténuation des échos et délivrant des valeurs d'atténuation d'écho applicable dans la trame courante ;
- des moyens d'atténuation de l'écho recevant ledit signal décodé de la trame courante, délivré par ledit décodeur par transformée inverse et lesdites valeurs d'atténuation d'écho applicable dans la trame courante.

**12.** Dispositif selon la revendication 10 ou 11, **caractérisé en ce que** ledit moyen de calcul de l'existence et de la position d'origine d'écho dans au moins une bande de fréquences basses et une bande de fréquences hautes de la trame courante est integré et comprend, connectés à un démultiplexeur dudit décodeur :

- une voie de décodage en bande de fréquences basses du signal audionumérique ;
- une voie de décodage en bande de fréquences hautes du signal audionumérique ;
- un circuit sommateur recevant le signal délivré par la voie de décodage en bande de fréquences hautes respectivement par la voie de décodage en bande de fréquences basses, et délivrant un signal audionumérique reconstitué.

**13.** Programme d'ordinateur comportant une suite d'instructions mémorisées sur un support pour exécution par un ordinateur ou un dispositif dédié, **caractérisé en ce que** lors de l'exécution desdites instructions celui-ci met en oeuvre le procédé de discrimination et d'atténuation des échos d'un signal audionumérique selon l'une des revendications 1 à 9.

**14.** Programme d'ordinateur selon la revendication 13, **caractérisé en ce que** ledit programme est un programme directement exécutable implanté dans un module de discrimination de l'existence d'échos dans les parties du signal à basse énergie, un module d'atténuation de l'écho et un module d'inhibition de l'atténuation des échos dans les parties du signal à forte énergie de la trame courante ou précédente, dans un dispositif de détection et d'atténuation d'échos selon l'une des revendications 10 à 12.

**Claims**

**1.** A method for discriminating and attenuating the echoes of a digital audio signal generated from a transform encoding, which generates echoes, **characterized in that** it includes at least in the decoding, for each current frame of this digital audio signal, the following steps:

- discriminating (D) a low-energy part of the current frame preceding a transition to a high-energy part of the current frame;
- defining a false-alarm part of the current frame corresponding to the non-discriminated parts of the current frame;
- determining an initial processing of the echoes with attenuation gain values of the current frame;
- attenuating (E) the echoes according to the initial processing of the echoes in said low-energy discriminated part of the current frame;
- inhibiting (F) the attenuation of the echoes in the initial processing in the false-alarm part.

**2.** Method according to Claim 1, **characterized in that**, the encoding also comprising, in parallel with the transform encoding stage, which generates echoes, a time encoding stage, which does not generate echoes, said determination of the initial processing of the echoes consists, in the decoding, for each current frame of this digital audio signal, in:

- comparing, in real time, in at least one frequency band, a value representative of a variable obtained from a characteristic of the time envelope of the signal obtained from an echo-generating decoding and of a variable obtained from the corresponding characteristic of the signal obtained from a non-echo-generating decoding to a threshold value; and
- according to the result of this comparison, concluding on the existence or the non-existence of an echo obtained from the transform encoding in the current frame; and, if an echo exists,
- determining the initial attenuation gains of the echoes according to said variables obtained from said echo-generating decoding and from said non-echo-generating decoding.

3. Method according to Claim 1 or 2, **characterized in that**, a current frame comprising a first and a second part, the step which consists in defining the false-alarm part comprises at least the following steps:

- generating a concatenated signal, from the reconstructed signal ($X_{rec}$) of the current frame and of the second part of the current frame ($X_{cur}$), said reconstructed signal being obtained by addition of the second part of the preceding frame and the first part of the current frame after application of an inverse transpose transform.
- dividing up said concatenated signal into an even number of sub-blocks of samples of determined length;
- calculating the energy of the signal of each of the sub-blocks of determined length;
- calculating the maximum of the energy values of all the sub-blocks;
- calculating the minimum of the energy values on the sub-blocks of the reconstructed signal ($X_{rec}$) of the current frame; and
- when the ratio of the maximum energy to the minimum energy is less than or equal to a determined threshold value, the absence of echo being revealed in all of the current frame, assigning the rank of the first sample of the current frame to a first index ($ind_1$) and assigning the rank of the last sample of the current frame to a second index ($ind_2$);
- identifying as said false-alarm part, the part of the current frame including the samples between said first and second indices.

4. Method according to Claim 3, **characterized in that** when said ratio of the maximum energy to the minimum energy is greater than said determined threshold value, a risk of pre-echoes being revealed in the only low-energy part of the signal, said method also comprises a step for calculating a first index representative of the rank of the first sample of the high-energy part of the current frame and a second index representative of the rank of the last sample of the high-energy part of the current frame.

5. Method according to Claim 4, **characterized in that** said first index is the index of the first sample of the first high-energy sub-block.

6. Method according to one of Claims 3 to 5, **characterized in that** said second index is calculated as the minimum between the value of the first index augmented by the maximum false-alarm length in terms of number of samples minus 1 and the value of the index of the end sample of the current frame being processed minus 1.

7. Method according to one of Claims 1 to 6 in which said inhibition is performed by setting the attenuation gain values to the value 1 in said false-alarm part while keeping the initial gain values outside the false-alarm part, and applying the resultant attenuation gain values to the samples of the reconstructed signal of the current frame.

8. Method according to Claim 7, **characterized in that** said resultant gain values are smoothed by filtering before being applied to the samples of the reconstructed signal of the current frame.

9. Method according to one of Claims 1 to 8, **characterized in that** the ratio of the maximum energy of the preceding frame is stored, and

- when the ratio of the energy of the preceding frame to the energy of the current frame is greater than a determined threshold value, a risk of post-echoes being revealed in the current frame, said method also consists in
- attenuating the echoes according to the initial processing of the echoes in the current frame.

10. Device for discriminating and attenuating the echoes of a digital audio signal generated by a transform encoder, which can reveal echoes, **characterized in that** said device comprises, at least on a transform decoder:

- means of discriminating a low energy part of the current frame preceding a transition to a high-energy part of the current frame;
- means of defining (15,18) a false-alarm part corresponding to the non-discriminated parts of the current frame;
- means of determining (16,19) an initial processing of the echoes with attenuation gain values;
- means of attenuating (17,20) the echoes according to the initial processing of the echoes applied to the low-energy discriminated part of the current frame;
- means of inhibiting (17,20) the attenuation of the echoes of the initial processing applied to the false-alarm part.

11. Device according to Claim 10, **characterized in that**, for a digital audio signal generated by a multilayer hierarchical encoder, in a decoder, said decoder comprising at least one time decoder, which does not generate echoes, and at least one transform decoder, which can reveal echoes, said device comprises at least on a time decoder and a transform decoder:

- a means of discriminating the low-energy part of the current frame preceding a transition to a high-energy part of the current frame delivering indices of the part of the current frame in which the attenuation of the echoes must be inhibited;
- a means of calculating the existence and the original position of echo in at least one frequency band of the current frame, receiving at least said indices of the part of the current frame in which the attenuation of the echoes must be inhibited and delivering echo attenuation values applicable in the current frame;
- means of attenuating the echo receiving said decoded signal of the current frame, delivered by said inverse transform decoder and said echo attenuation values applicable in the current frame.

12. Device according to Claim 10 or 11, **characterized in that** said means of calculating the existence and the original position of echo in at least one low frequency band and one high frequency band of the current frame is integrated and comprises, connected to a demultiplexer of said decoder:

- a low-frequency band decoding channel for the digital audio signal;
- a high-frequency band decoding channel for the digital audio signal;
- a summing circuit receiving the signal delivered by the high-frequency band decoding channel respectively by the low-frequency band decoding channel, and delivering a reconstructed digital audio signal.

13. Computer program comprising a series of instructions stored on a medium for execution by a computer or a dedicated device, **characterized in that**, on execution of said instructions, the latter implements the method of discriminating and attenuating the echoes of a digital audio signal according to one of Claims 1 to 9.

14. Computer program according to Claim 13, **characterized in that** said program is a directly executable program implanted in a module for discriminating the existence of echoes in the low-energy parts of the signal, a module for attenuating the echo and a module for inhibiting the attenuation of the echoes in the high-energy parts of the signal of the current or preceding frame, in a device for detecting and attenuating echoes according to one of Claims 10 to 12.

**Patentansprüche**

1. Verfahren zur Diskriminierung und Dämpfung der Echos eines audiodigitalen Signals, das ausgehend von einer Echos erzeugenden Transformationscodierung erzeugt wird, **dadurch gekennzeichnet, dass** es mindestens bei der Decodierung für jeden laufenden Rahmen dieses audiodigitalen Signals die folgenden Schritte umfasst:

- Diskriminieren (D) eines Niedrigenergiebereichs des laufenden Rahmens, der vor einem Übergang zu einem Hochenergiebereich des laufenden Rahmens liegt;
- Definieren eines Fehlalarmbereichs des laufenden Rahmens entsprechend den nicht diskriminierten Bereichen des laufenden Rahmens;
- Bestimmen einer Anfangsverarbeitung der Echos mit Dämpfungsverstärkungswerten des laufenden Rahmens;
- Dämpfen (E) der Echos gemäß der Anfangsverarbeitung der Echos im diskriminierten Niedrigenergiebereich des laufenden Rahmens;
- Verhindern (F) der Dämpfung der Echos der Anfangsverarbeitung im Fehlalarmbereich.

2. Verfahren nach Anspruch 1, **dadurch gekennzeichnet, dass**, da die Codierung ebenfalls parallel zur Echos erzeugenden Transformationscodierungsstufe eine keine Echos erzeugende Zeitcodierungsstufe aufweist, die Bestimmung der Anfangsverarbeitung der Echos bei der Decodierung für jeden laufenden Rahmen dieses audiodigitalen Signals darin besteht:

- in Echtzeit in mindestens einem Frequenzband einen Wert, der für eine von einer Eigenschaft der zeitlichen Hüllkurve des von einer Echo erzeugenden Decodierung stammenden Signals stammende Variable und für eine von der entsprechenden Eigenschaft des von einer kein Echo erzeugenden Decodierung stammenden Signals stammende Variable repräsentativ ist, mit einem Schwellwert zu vergleichen; und,
- abhängig vom Ergebnis dieses Vergleichs auf das Vorhandensein oder Nichtvorhandensein eines von der Transformationscodierung im laufenden Rahmen stammenden Echos zu schließen; und im Fall des Vorhandenseins eines Echos
- die Anfangsdämpfungsverstärkungen der Echos abhängig von den von der Echo erzeugenden Decodierung und von der kein Echo erzeugenden Decodierung stammenden Variablen zu bestimmen.

**3.** Verfahren nach Anspruch 1 oder 2, **dadurch gekennzeichnet, dass**, da ein laufender Rahmen einen ersten und einen zweiten Bereich enthält, der Schritt, der darin besteht, den Fehlalarmbereich zu definieren, mindestens die folgenden Schritte aufweist:

- Erzeugen eines verketteten Signals ausgehend vom wiederhergestellten Signal ($X_{rec}$) des laufenden Rahmens und vom zweiten Bereich des laufenden Rahmens ($X_{cur}$), wobei das wiederhergestellte Signal durch Addition des zweiten Bereichs des vorhergehenden Rahmens und des ersten Bereichs des laufenden Rahmens nach Anwendung einer Umsetzung durch inverse Transformation erhalten wird;
- Zerhacken des verketteten Signals in eine gerade Anzahl von Subblöcken von Tastproben bestimmter Länge;
- Berechnen der Energie des Signals jedes der Subblöcke bestimmter Länge;
- Berechnen des Maximums der Energiewerte aller Subblöcke;
- Berechnen des Minimums der Energiewerte an den Subblöcken des wiederhergestellten Signals ($X_{rec}$) des laufenden Rahmens; und,
- wenn das Verhältnis der maximalen Energie zur minimalen Energie geringer als ein oder gleich einem bestimmten Schwellwert ist, wobei die Abwesenheit eines Echos in der Gesamtheit des laufenden Rahmens aufgezeigt wird, den Rang der ersten Tastprobe des laufenden Rahmens einem ersten Index ($ind_1$) zuzuweisen und den Rang der letzten Tastprobe des laufenden Rahmens einem zweiten Index ($ind_2$) zuzuweisen;
- den Bereich des laufenden Rahmens als den Fehlalarmbereich zu identifizieren, der die Tastproben zwischen dem ersten und dem zweiten Index enthält.

**4.** Verfahren nach Anspruch 3, **dadurch gekennzeichnet, dass**, wenn das Verhältnis der maximalen Energie zur minimalen Energie höher als der bestimmte Schwellwert ist, wobei eine Gefahr von Vorechos nur im Niedrigenergiebereich des Signals aufgezeigt wird, das Verfahren außerdem einen Schritt aufweist, der es ermöglicht, einen ersten Index, der für den Rang der ersten Tastprobe des Hochenergiebereichs des laufenden Rahmens repräsentativ ist, und einen zweiten Index zu berechnen, der für den Rang der letzten Tastprobe des Hochenergiebereichs des laufenden Rahmens repräsentativ ist.

**5.** Verfahren nach Anspruch 4, **dadurch gekennzeichnet, dass** der erste Index der Index der ersten Tastprobe des ersten Hochenergie-Subblocks ist.

**6.** Verfahren nach einem der Ansprüche 3 bis 5, **dadurch gekennzeichnet, dass** der zweite Index als das Minimum zwischen dem Wert des ersten Indexes erhöht um die maximale Fehlalarmlänge in Anzahl von Tastproben minus eins und dem Wert des Indexes der Endtastprobe des verarbeiteten laufenden Rahmens minus eins ist.

**7.** Verfahren nach einem der Ansprüche 1 bis 6, bei dem die Verhinderung durch Setzen auf den Wert 1 der Werte von Dämpfungsverstärkungen im ersten Fehlalarmbereich, indem die Anfangsdämpfungswerte außerhalb des Fehlalarmbereichs gehalten werden, und Anwendung der resultierenden Dämpfungsverstärkungswerte an die Tastproben des wiederhergestellten Signals des laufenden Rahmens durchgeführt wird.

**8.** Verfahren nach Anspruch 7, **dadurch gekennzeichnet, dass** die resultierenden Verstärkungswerte durch Filterung geglättet werden, ehe sie an die Tastproben des wiederhergestellten Signals des laufenden Rahmens angewendet werden.

**9.** Verfahren nach einem der Ansprüche 1 bis 8, **dadurch gekennzeichnet, dass** das Verhältnis des Energiemaximums des vorhergehenden Rahmens gespeichert wird, und

- wenn das Verhältnis der Energie des vorhergehenden Rahmens zur Energie des laufenden Rahmens höher als ein bestimmter Schwellwert ist, wobei eine Gefahr von Nachechos im laufenden Rahmen aufgezeigt wird, das Verfahren außerdem darin besteht
- die Echos gemäß der Anfangsverarbeitung der Echos im laufenden Rahmen zu dämpfen.

**10.** Vorrichtung zur Diskriminierung und Dämpfung der Echos eines audiodigitalen Signals, das von einem Transformationscodierer erzeugt wird, die Echos offenbaren kann, **dadurch gekennzeichnet, dass** die Vorrichtung mindestens im Bereich eines Transformationsdecodierers aufweist:

- Einrichtungen zur Diskriminierung eines Niedrigenergiebereichs des laufenden Rahmens, der vor einem Übergang zu einem Hochenergiebereich des laufenden Rahmens liegt;
- Einrichtungen (15, 18) zur Definition eines Fehlalarmbereichs entsprechend den nicht diskriminierten Bereichen des laufenden Rahmens;
- Einrichtungen (16, 19) zur Bestimmung einer Anfangsverarbeitung der Echos mit Dämpfungsverstärkungswerten;
- Einrichtungen (17, 20) zur Dämpfung der Echos gemäß der Anfangsverarbeitung der Echos, die an den diskriminierten Niedrigenergiebereich des laufenden Rahmens angewendet werden;
- Einrichtungen (17, 20) zur Verhinderung der Dämpfung der Echos der Anfangsverarbeitung, die an den Fehlalarmbereich angewendet wird.

11. Vorrichtung nach Anspruch 10, **dadurch gekennzeichnet, dass**, für ein audiodigitales Signal, das von einem hierarchischen Mehrschicht-Codierer erzeugt wird, in einem Decodierer, wobei der Decodierer mindestens einen keine Echos erzeugenden zeitlichen Decodierer und mindestens einen Transformationsdecodierer aufweist, die Echos aufzeigen kann, die Vorrichtung mindestens im Bereich eines zeitlichen Decodierers und eines Transformationsdecodierers aufweist:

- eine Einrichtung zur Diskriminierung des Niedrigenergiebereichs des laufenden Rahmens, der vor einem Übergang zu einem Hochenergiebereich laufenden Rahmens liegt, die Indices des Bereichs des laufenden Rahmens liefert, wo die Dämpfung der Echos verhindert werden soll;
- eine Einrichtung zur Berechnung des Vorhandenseins und der Ursprungsposition eines Echos in mindestens einem Frequenzband des laufenden Rahmens, die mindestens die Indices des Bereichs des laufenden Rahmens, wo die Dämpfung der Echos verhindert werden soll, empfängt und Werte einer im laufenden Rahmen anwendbaren Echodämpfung liefert;
- Einrichtungen zur Dämpfung des Echos, die das decodierte Signal des laufenden Rahmens, das vom inversen Transformationsdecodierer geliefert wird, und die Werte der im laufenden Rahmen anwendbaren Echodämpfung empfangen.

12. Vorrichtung nach Anspruch 10 oder 11, **dadurch gekennzeichnet, dass** die Einrichtung zur Berechnung des Vorhandenseins und der Ursprungsposition eines Echos in mindestens einem Niedrigfrequenzband und einem Hochfrequenzband des laufenden Rahmens integriert ist und mit einem Demultiplexer des Decodierers verbunden enthält:

- einen Decodierungskanal im Niedrigfrequenzband des audiodigitalen Signals;
- einen Decodierungskanal im Hochfrequenzband des audiodigitalen Signals;
- eine Summierschaltung, die das vom Decodierungskanal im Hochfrequenzband bzw. vom Decodierungskanal im Niedrigfrequenzband gelieferte Signal empfängt und ein wiederhergestelltes audiodigitales Signal liefert.

13. Computerprogramm, das eine Folge von Anweisungen aufweist, die auf einem Träger zur Ausführung durch einen Computer oder eine dedizierte Vorrichtung gespeichert sind, **dadurch gekennzeichnet, dass** es bei der Ausführung der Anweisungen das Verfahren zur Diskriminierung und Dämpfung der Echos eines audiodigitalen Signals nach einem der Ansprüche 1 bis 9 anwendet.

14. Computerprogramm nach Anspruch 13, **dadurch gekennzeichnet, dass** das Programm ein direkt ausführbares Programm ist, das in ein Modul zur Diskriminierung des Vorhandenseins von Echos in den Niedrigenergiebereichen des Signals, ein Modul zur Dämpfung des Echos und ein Modul zur Verhinderung der Dämpfung der Echos in den Hochenergiebereichen des Signals des laufenden oder vorhergehenden Rahmens, in einer Vorrichtung zur Erfassung und Dämpfung von Echos nach einem der Ansprüche 10 bis 12 installiert ist.

FIG. 1

FIG. 2a
(FIG. 3a FR0507471)

FIG. 2b
(FIG. 3b FR0507471)

$x^a_{P_i}(n)$ →

$x_{T_j}(n)$ → **CALCUL D'ENVELOPPE TEMPORELLE** `10`

$Env_{P_i}(k)$ →

$Env_{T_j}(k)$ →

**CALCUL DU RAPPORT D'ENVELOPPE** `11`

$R(k)$ →

**CALCUL DECISION ET POSITION D'ATTÉNUATION** `12`

→ DPG

## FIG. 2c
(FIG. 3c FR0507471)

200 — $k = Pos$

201 — $g(k) = Min\left(\dfrac{Env_{P_i}(k)}{Env_{T_j}(k)}, 1\right)$

$n = 0$ — 202

207 — $k = k+1$

$S_{out}(kN+n) = Cte\ g(k)\ S_{in}(kN+n)$ — 203

205 — $n = n+1$

204 — $n < N-1$  oui

NON

206 — $k < K-1$  oui

NON

208 — FIN

## FIG. 2d
(FIG. 3e FR0507471)

EP 2 002 428 B1

FIG. 2e
(FIG. 11 FR0507471)

24

2ᵉᵐᵉ partie de la
trame précedante

1ᵉʳᵉ partie de la
trame courante

2ᵉᵐᵉ partie de la
trame courante

n=0          n=L-1          n=2L-1

signal reconstruit de la trame courante

## FIG. 2f

$$X_{TJ}(n) \longrightarrow Env_{TJ}(k)$$

$$X_{pi}^{a}(n) \longrightarrow Env_{Pi}(k) \quad R_k = \frac{Env_{TJ}(k)}{Env_{Pi}(k)}$$

A

non    $R(k) \geq S$    oui

C

$\not\exists$ ÉCHO $X_{TJ}(n)$

B

$\exists$ ÉCHO $X_{TJ}(n)$
Pos k/R(k)=S

D

DISCRIMINATION ÉCHOS
$X_{TJ}(n)$ low $\longrightarrow E_{XTj}(n)$ low

E

ATTÉNUATION ÉCHOS
$E_{XTj}(n)$ low

F

INHIBITION ATTENUATION
$XT_j(n)$ hiw

## FIG. 3a

FIG. 3b

FIG. 3c

FIG. 3d

$L = 160; K_2 = 4; N_2 = L / K_2 = 40; C =$

## FIG. 4a

$ind_1 = argmax\ (En(k))^*N_2 = 200$
$ind_2 = min\ (ind_1 + C\text{-}1, L\text{-}1) = 159$

$(ind_1 > ind_2) \longrightarrow$
Pas de zone "fausse alarme" détéctée dans la trame courante

$L = 160; K_2 = 4; N_2 = L / K_2 = 40; C =$

## FIG. 4b

$ind_1 = argmax\ (En(k))^*N_2 = 80$
$ind_2 = min\ (ind_1 + C\text{-}1, L\text{-}1) =$

Zone "fausse alarme" détéctée dans la trame courante: échantillons $X_{rec}\ (80,...,159)$

Signal d'entrée

Signal de sortie du décodeur sans pré-echo

Signal de sortie du décodeur TDAC

Signal de sortie final

FIG. 4c

Signal d'entrée

Signal de sortie du décodeur sans pré-echo

Signal de sortie du décodeur TDAC

Gain de traitement pré-echo

Sortie du décodeur TDAC après le traitement pré-echo

Signal de sortie final

FIG. 4d

Signal d'entrée

Signal de sortie du décodeur sans pré-echo

Signal de sortie du décodeur TDAC

Gain de traitement pré-echo

Sortie du décodeur TDAC après le traitement pré-echo

Signal de sortie final

# FIG. 4e

$L = 160; K_2 = 4; N_2 = L / K_2 = 40; C = 80; S = 8$

Pas de grande variation d'énergie; $max_{en} / min_{en} < S$

$ind_1 = 0$
$ind_2 = L-1 = 159$ } Zone "fausse alarme" détéctée dans la trame courante:
Toute le trame, échantillons $X_{rec}$ (0,...,159)

## FIG. 5

Signal d'entrée

encodeur

transmission

décodeur

Additions /
recouvrements

Signal de sortie

FIG. 6

FIG. 7

$N_2 = L/K_2$ —101

$k = 0$ —102

$k = k+1$ —105

$$En(k) = \sum_{i=kN_2}^{(k+1)N_2 - 1} x_{rec}^2(i)$$ —103

$k < K_2 - 1$ —104  oui  non

$k = 0$ —106

$k = k+1$  109

$$En(k + K_2) = h^2(L) \cdot \sum_{i=kN_2}^{(k+1)N_2 - 1} x_{cur}^2(L + i)$$ —107

$k < K_2/2 - 1$ —108  oui  non

110— $min_{en} = min(En(k)); k = 0,...,K_2 - 1$

111— $max_{en} = max(En(k)); k = 0,...,1.5\,K_2 - 1$
$ind_1 = argmax(En(k))*N_2$

114— $ind_1 = 0$ $ind_2 = L-1$  oui

$max_{en}/min_{en} < S$ —112  non

$ind_2 = min(ind_1 + C-1, L-1)$ 113

FIN —115

## FIG. 8a

$N_2 = L/K_2$ —201

$k = 0$ —202

$$En(k) = \sum_{i=kN_2}^{(k+1)N_2-1} x_{rec}^2(i)$$ —203

$k < K_2 - 1$ —204 — oui — $k = k+1$ —205

non

$k = 0$ —206

$$En(k + K_2) = h^2(L) \cdot \sum_{i=kN_2}^{(k+1)N_2-1} x_{cur}^2(L+i)$$ —207

$k < K_2/2 - 1$ —208 — oui — $k = k+1$ —209

non

$max_{rec} = max(En(k)); \ k = 0,...,K_2-1$ —210

$max_{prev}/max_{rec} > S_1$ —211 — oui — $max_{prev} = max_{rec}$
$ind_1 = L$
$ind_2 = L-1$ —212

non

$max_{prev} = max_{rec}$ —213

214— $max_{en} = max(En(k)); \ k = 0,...,1.5 \ K_2-1$
$ind_1 = argmax(En(k))*N_2$ —214

215— $min_{en} = min(En(k)); \ k = 0,...,K_2-1$ —215

$max_{en}/min_{en} < S_2$ —216 — oui — $ind_1 = 0$
$ind_2 = L-1$ —217

non

$ind_2 = min(ind_1+C-1, L-1)$ —218

FIN —219

FIG. 8b

FIG. 8c

$$g'(0) = \alpha g'_{old} + (1-\alpha)g(0)$$ 401

$$n = 1$$ 402

405

$$n = n + 1$$

$$g'(n) = \alpha g'(n-1) + (1-\alpha)g(n)$$ 403

404

oui $$n < L-1$$

non

$$g'_{old} = (L-1)$$ 406

FIN 407

# FIG. 8d

**FIG. 9a**

**FIG. 9b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0507471

- US 5214742 A, B. Edler
- US 20030154074 A, K. Kikuiri

**Littérature non-brevet citée dans la description**

- **Y. Mahieux ; J. P. Petit.** High Quality Audio Transform Coding at 64 kbits. *IEEE Trans on Communications,* Novembre 1994, vol. 42 (11